# EUROPEAN PATENT APPLICATION

(11) **EP 4 839 009 A1**
(43) Date of publication of application: **11.11.2026**
(21) Application number: 24911012.3
(22) Date of filing: 23.12.2024
(51) Int. Cl.: H04W 80/06

(54) **TRANSMISSION METHOD, TERMINAL, AND NETWORK SIDE DEVICE**

(30) Priority: 28.12.2023 CN 202311842401
(71) Applicant: VIVO MOBILE COMMUNICATION CO., LTD., Dongguan, Guangdong 523863 (CN)
(72) Inventor: LIU, Siqi, Dongguan, Guangdong 523863 (CN); LIN, Zhipeng, Dongguan, Guangdong 523863 (CN); JI, Zichao, Dongguan, Guangdong 523863 (CN)
(74) Representative: dompatent
(86) International application number: PCT/CN2024/141358
(87) International publication number: WO 2025/140084

(57) **Abstract**

The present application relates to the technical field of communications, and discloses a transmission method, a terminal, and a network side device. The transmission method in the embodiments of the present application comprises: a terminal determines a transmission mode for one or at least two transmission objects, wherein the transmission mode comprises using the same or different modes for transmission, or the transmission mode is associated with at least one of the waveform, initialization parameters, scrambling mode, sequence, phase or rotation phase used when using the same or different modes for transmission, the transmission object comprises a signal or a channel or a part of the signal or a part of the channel, and the at least two transmission objects are transmitted by means of frequency division multiplexing (FDM) or in the form of a discrete frequency domain; and the terminal transmits the one or at least two transmission objects on the basis of the transmission mode.

## Description

### CROSS-REFERENCE TO RELATED APPLICATIONS

The present application claims priority to the Chinese patent application No. 202311842401.7, filed with the China National Intellectual Property Administration on December 28, 2023, and entitled "TRANSMISSION OR RECEPTION METHOD, TERMINAL, AND NETWORK-SIDE DEVICE", which is incorporated herein by reference in its entirety.

### TECHNICAL FIELD

The present application pertains to the field of communication technologies, and specifically relates to a transmission or reception method, a terminal, and a network-side device.

### BACKGROUND

When a network-side device communicates with a terminal, the network-side device may send or receive a plurality of transmission or reception objects in a frequency division multiplexing (Frequency Division Multiplex, FDM) manner or in a discrete frequency domain. Correspondingly, the terminal may receive or send a plurality of transmission or reception objects in an FDM manner or in a discrete frequency domain. However, in some scenarios, when a plurality of transmission or reception objects are received or sent in an FDM manner or in a discrete frequency domain, an increase in peak to average power ratio (Peak to Average Power Ratio, PAPR) may occur, resulting in reduced coverage. For a network energy saving (Network Energy Saving, NES) system or a terminal energy saving system, a small base station, or a system operating in FR2 or an unlicensed frequency band, the power is typically more constrained, and the coverage is relatively small. To ensure sufficient coverage, transmission or reception of the plurality of transmission or reception objects needs to be optimized.

### SUMMARY

Embodiments of the present application provide a transmission or reception method, a terminal, and a network-side device, so as to resolve the problem on how to ensure coverage when a network-side device and a terminal send or receive a plurality of transmission or reception objects in an FDM manner or in a discrete frequency domain.

According to a first aspect, a transmission or reception method is provided and performed by a terminal. The method includes:
determining, by the terminal, a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in a frequency division multiplexing FDM manner or in a discrete frequency domain; and
transmitting or receiving, by the terminal, the one or at least two transmission or reception objects according to the transmission or reception manner.

According to a second aspect, a transmission or reception method is provided and performed by a network-side device. The method includes:
determining, by the network-side device, a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object comprises a signal, a channel, a part of a signal, or a part of a channel, and the at least two transmission or reception objects are transmitted or received in an FDM manner or in a discrete frequency domain; and
transmitting or receiving, by the network-side device, the one or at least two transmission or reception objects according to the transmission or reception manner.

According to a third aspect, a transmission or reception apparatus is provided, including:
a determining module, configured to determine a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object comprises a signal, a channel, a part of a signal, or a part of a channel, and the at least two transmission or reception objects are transmitted or received in a frequency division multiplexing FDM manner or in a discrete frequency domain; and
a transmission or reception module, configured to transmit or receive the one or at least two transmission or reception objects according to the transmission or reception manner.

According to a fourth aspect, a terminal is provided, where the terminal includes a processor and a memory, the memory stores a program or an instruction executable on the processor, and the program or instruction is executed by the processor, the steps of the method according to the first aspect are implemented.

According to a fifth aspect, a terminal is provided, including a processor and a communication interface. The processor is configured to determine a transmission or reception manner for one or at least two transmission or reception objects, the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in a frequency division multiplexing FDM manner or in a discrete frequency domain. The communication interface is configured to transmit or receive the one or at least two transmission or reception objects according to the transmission or reception manner.

According to a sixth aspect, a network-side device is provided, where the network-side device includes a processor and a memory, the memory stores a program or an instruction executable on the processor, and when the program or instruction is executed by the processor, the steps of the method according to the second aspect are implemented.

According to a seventh aspect, a network-side device is provided, including a processor and a communication interface, where the processor is configured to determine a transmission or reception manner for one or at least two transmission or reception objects, the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in a frequency division multiplexing FDM manner or in a discrete frequency domain; and the communication interface is configured to transmit or receive the one or at least two transmission or reception objects according to the transmission or reception manner.

According to an eighth aspect, a readable storage medium is provided, where a program or an instruction is stored on the readable storage medium, when the program or instruction is executed by a processor, the steps of the method according to the first aspect are implemented, or the steps of the method according to the second aspect are implemented.

According to a ninth aspect, a wireless communication system is provided, including: a terminal and a network-side device. The terminal is configured to perform the steps of the method according to the first aspect, and the network-side device is configured to perform the steps of the method according to the second aspect.

According to a tenth aspect, a chip is provided, where the chip includes a processor and a communication interface, the communication interface is coupled to the processor, and the processor is configured to run a program or an instruction to implement the method according to the first aspect, or to implement the method according to the second aspect.

According to an eleventh aspect, a computer program/program product is provided, where the computer program/program product is stored in a storage medium, and the program/program product is executed by at least one processor to implement the steps of the method according to the first aspect, or to implement the steps of the method according to the second aspect.

In the embodiments of the present application, when a terminal sends or receives a plurality of transmission or reception objects in an FDM manner or in a discrete frequency domain (the network-side device receives or sends in an FDM manner or in a discrete frequency domain), for one or at least two of the transmission or reception objects, a same manner or different manners may be used for transmission or reception, and when transmitting or receiving using a same manner or different manners, the terminal may use at least one of a same or different waveforms, initialization parameters, scrambling schemes, sequences, phases, or rotation phases for transmission or reception. Accordingly, in a scenario of transmitting or receiving a plurality of transmission or reception objects in an FDM manner or in a discrete frequency domain, the terminal and the network-side device may select an appropriate transmission or reception manner for transmission or reception, thereby reducing PAPR and ensuring coverage.

### BRIEF DESCRIPTION OF DRAWINGS

FIG. 1 is a schematic diagram of a wireless communication system according to embodiments of the present application;
FIG. 2 is a schematic flowchart of a transmission or reception method according to embodiments of the present application;
FIG. 3 is a schematic flowchart of a transmission or reception method according to embodiments of the present application;
FIG. 4 is a schematic structural diagram of a transmission or reception apparatus according to embodiments of the present application;
FIG. 5 is a schematic structural diagram of a transmission or reception apparatus according to embodiments of the present application;
FIG. 6 is a schematic structural diagram of a communication device according to embodiments of the present application;
FIG. 7 is a schematic structural diagram of a terminal according to embodiments of the present application; and
FIG. 8 is a schematic structural diagram of a network-side device according to embodiments of the present application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by persons of ordinary skill in the art shall fall within the protection scope of the present application.

The terms "first", "second" and the like in the present application are used to distinguish similar objects and are not used to describe a specific order or sequence. It should be understood that the terms used in such a way may be interchangeable in appropriate circumstances such that the embodiments of the present application may be implemented in other orders than the order illustrated or described herein. In addition, objects distinguished by "first" and "second" are generally of the same type, and the quantities of the objects are not limited, for example, there may be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after the character.

The term "indication" in the present application may be a direct indication (or explicit indication) or an indirect indication (or implicit indication). The direct indication may be understood as the sender explicitly informing the receiver of specific information, operations to be performed, or request results in the sent indication; the indirect indication may be understood as the receiver determining corresponding information according to the indication sent by the sender, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies may also be applied to systems other than NR systems, such as the 6^{th} Generation (6^{th} Generation, 6G) communication system.

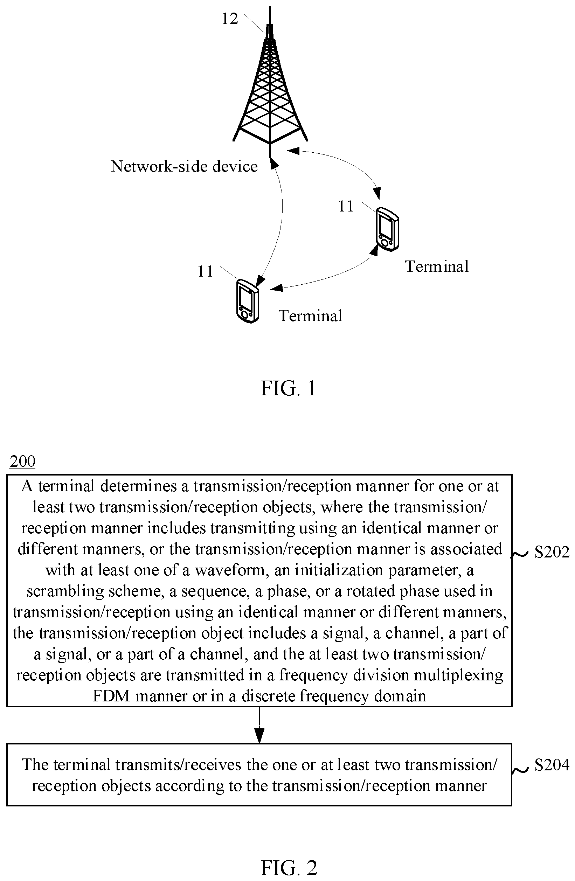

FIG. 1 is a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), a ship-borne device, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart j ewelry (a smart bangle, a smart bracelet, a smart ring, a smart necklace, a smart anklet, a smart chain anklet, or the like), a smart wristband, smart clothing, or the like. The vehicle user equipment may also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or core network device, where the access network device may also be referred to as radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or another appropriate term in the field. Provided that the same technical effects are achieved, the base station is not limited to a specific technical term. It should be noted that in the embodiments of the present application, the base station in the NR system is merely used as an example for introduction, and the specific type of the base station is not limited.

The following describes in detail a transmission or reception method, a terminal, and a network-side device provided in the embodiments of the present application through some embodiments and application scenarios thereof with reference to the accompanying drawings.

As shown in FIG. 2, embodiments of the present application provide a transmission or reception method 200. The method may be performed by a terminal. In other words, the transmission or reception method may be performed by software or hardware installed in the terminal. The transmission or reception method includes the following steps.

S202: A terminal determines a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in a frequency division multiplexing FDM manner or in a discrete frequency domain.

S204: The terminal transmits or receives the one or at least two transmission or reception objects according to the transmission or reception manner.

When the terminal transmits (sends or receives) a plurality of transmission or reception objects in an FDM manner or in a discrete frequency domain, for one or at least two of the transmission or reception objects, a transmission or reception manner (sending manner or receiving manner) for the one or at least two transmission or reception objects may be determined, and then the one or at least two transmission or reception objects are transmitted or received in the determined transmission or reception manner.

The at least two transmission or reception objects may be part of the plurality of transmission or reception objects, or all of the plurality of transmission or reception objects, which is not specifically limited herein. For each transmission or reception object, the transmission or reception object may be a signal, a channel, a part of a signal, or a part of a channel. Correspondingly, the at least two transmission or reception objects may be at least two signals, at least two channels, parts of at least two signals, or parts of at least two channels, or may be any combination among the following four items: at least one signal, at least one channel, a part of at least one signal, and a part of at least one channel. For example, the at least two transmission or reception objects may be two signals, two channels, two parts of one signal, two parts of one channel, a part of one signal and a part of another signal, a part of one signal and a part of one channel, a part of one channel and a part of another channel, one signal and a part of another signal, or one channel and a part of another channel, which are not described one by one herein.

Optionally, in some implementations, the transmission or reception object may include, but is not limited to, at least one of the following:
synchronization signal; broadcast signal; synchronization signal and PBCH block (Synchronization Signal and PBCH block, SSB); master information block (Master Information Block, MIB); random access channel occasion (RACH occasion, RO); paging occasion (Paging Occasion, PO); paging frame (Paging frame, PF); physical uplink shared channel (Physical Uplink Shared Channel, PUSCH) occasion; carrier (carrier); search space set SearchSpace set.

Optionally, the at least two transmission or reception objects may be of a same type of signal. For example, the at least two transmission or reception objects may all are synchronization signals or broadcast channels, such as PUCCHs.

A transmission or reception manner for one transmission or reception object may include at least one of a waveform, an initialization parameter, a scrambling scheme, a sequence, a phase, or a rotation phase used when transmitting or receiving the object.

The transmission or reception manner for the at least two transmission or reception objects may be transmitting or receiving the at least two transmission or reception objects using a same manner, or transmitting or receiving the at least two transmission or reception objects using different manners, or at least one of a waveform, an initialization parameter, a scrambling scheme, a sequence, a phase, or a rotation phase used when transmitting or receiving the at least two transmission or reception objects using a same manner, or at least one of a waveform, an initialization parameter, a scrambling scheme, a sequence, a phase, or a rotation phase used when transmitting or receiving the at least two transmission or reception objects using different manners. Accordingly, when transmitting or receiving the at least two transmission or reception objects, the terminal may select an appropriate transmission or reception manner, thereby reducing PAPR and ensuring coverage.

In the case of transmitting or receiving the at least two transmission or reception objects using different manners, optionally, in some implementations, the transmitting or receiving using different manners may satisfy at least one of the following:
the at least two transmission or reception objects are in different waveforms;
the at least two transmission or reception objects are generated based on different initialization parameters;
the at least two transmission or reception objects use different scrambling schemes;
the at least two transmission or reception objects use different sequences;
the at least two transmission or reception objects use different phases or phase rotations.

The above waveform may include, but is not limited to, at least one of multicarrier waveform, single-carrier waveform, orthogonal time frequency space (Orthogonal Time Frequency Space, OTFS) waveform, low-power waveform, Chirp waveform, frequency modulated continuous wave (Frequency Modulated Continuous Wave, FMCW) waveform, linear frequency modulation (Linear Frequency Modulation, LFM) waveform, amplitude modulation waveform, frequency modulation waveform, and phase modulation waveform. The multicarrier waveform may be, for example, cyclic prefix orthogonal frequency division multiplexing (Cyclic Prefix Orthogonal Frequency Division Multiplexing, CP-OFDM), filter-bank multicarrier (Filter-bank multicarrier, FBMC), generalized frequency division multiplexing (Generalized Frequency Division Multiplexing, GFDM), universal filtered multi carrier (Universal Filtered Multi Carrier, UFMC), or filter-orthogonal frequency division multiplexing (Filter-Orthogonal Frequency Division Multiplexing, F-OFDM). The single-carrier waveform may be, for example, discrete Fourier transform-spread-orthogonal frequency division multiplexing (Discrete Fourier Transform-Spread-Orthogonal Frequency Division Multiplexing, DFT-s-OFDM), constant envelope waveform, or single carrier frequency domain equalization (Single Carrier Frequency Domain Equalization, SC-FDE). The OTFS waveform is mainly for high speed or large payload. The low-power waveform may be, for example, ultra wide band (Ultra Wide band, UWB).

The at least two transmission or reception objects are generated based on different initialization parameters, for example, based on different N_ID1s, N_ID2s, physical cell identifiers (Physical Cell Identifier, PCI), or indexes.

The at least two transmission or reception objects use different scrambling schemes, for example, using different scrambling code sequences for scrambling.

The at least two transmission or reception object use different sequences, for example, using different types of sequences (for example, golden sequence, m-sequence, zc sequence), or using different sequences of a same type

When determining the transmission or reception manner for the at least two transmission or reception objects, the terminal may determine the transmission or reception manner based on at least one of an implicit method and an explicit method. The implicit method may include determining, by the terminal, the transmission or reception manner according to related information when transmitting or receiving the at least two transmission or reception objects and a correspondence between the related information and the transmission or reception manner. The explicit method may include determining, by the terminal, the transmission or reception manner according to an indication from the network-side device. The transmission or reception manner determined according to the implicit method or explicit method may be transmitting or receiving the at least two transmission or reception objects using a same manner or different manners, or may be at least one of a waveform, an initialization parameter, a scrambling scheme, a sequence, a phase, or a rotation phase used when transmitting or receiving the at least two transmission or reception objects using a same manner or different manners.

Optionally, in some implementations, in the case of determining the transmission or reception manner based on the implicit manner, the terminal determining the transmission or reception manner for the at least two transmission or reception objects may include at least one of the following (1) to (15).
(1) Determining the transmission or reception manner according to a band (Band), a subband (subband), a band combination (bandCombination), or a frequency range (Frequency Range, FR).

The band, subband, band combination, or frequency range has a correspondence with the transmission or reception manner. In some implementations, different bands or subbands or band combinations or FRs have a predefined correspondence with transmitting or receiving using a same manner or different manners. For example, when operating in a millimeter wave frequency band, the at least two transmission or reception objects may be transmitted or received using different manners (at least one of different waveforms, different initialization parameters, different scrambling sequences, different signal sequences, different phases, or different phase rotations). When operating in FR1 or a low frequency band (for example, 1 GHz), the at least two transmission or reception objects may be transmitted or received using a same manner (at least one of same waveform, same initialization parameter, same scrambling sequence, same signal sequence, same phase, or same phase rotation). Alternatively, when operating in a millimeter wave frequency band, the at least two transmission or reception objects may be transmitted or received using a same manner, and when operating in FR1 or a low frequency band (for example, 1 GHz), the at least two transmission or reception objects may be transmitted or received using different manners.

In some implementations, different bands or subbands or band combinations or FRs have a predefined correspondence with at least one of a waveform, an initialization parameter, a scrambling scheme, a sequence, a phase, or a rotation phase used for transmission or reception. For example, when operating in the FR2-2 or FR2-3 frequency band, the at least two transmission or reception objects may use phase rotation 1 or phase rotation 2 respectively; when operating in FR2-1 frequency band, the at least two transmission or reception objects may use phase rotation 3 or phase rotation 4 respectively. Alternatively, when operating in FR2-2 or FR2-3 frequency band, the at least two transmission or reception objects may use phase rotation 3 or phase rotation 4 respectively; when operating in FR2-1 frequency band, the at least two transmission or reception objects may use phase rotation 1 or phase rotation 2 respectively.

In some implementations, each band or subband or band combination or FR may be associated with a plurality of transmission or reception manners (for example, transmitting or receiving using different manners, transmitting or receiving using a same manner, at least one of a waveform, an initialization parameter, a scrambling scheme, a sequence, a phase, or a rotation phase used in transmission or reception using different manners, at least one of a waveform, an initialization parameter, a scrambling scheme, a sequence, a phase, or a rotation phase used in transmission or reception using a same manner). A specific transmission or reception manner to be used may be further determined according to other factors (for example, base station type).

For example, base stations of a plurality of types or capabilities need to be supported on a certain band or subband or band combination or FR. For example, some local base stations need to be supported, the capability of such base stations is relatively weak (for example, with a maximum transmit power of 24 dBm), and some global base stations or conventional base stations also need to be supported, the capability of such base stations is relatively strong (for example, with a maximum transmit power of 38 dBm or even unlimited). Although the two types of base stations operate on a same band or subband or band combination or FR, the transmission or reception manners used may be different. In determining the transmission or reception manner, for example, if the base station type is a local base station, the at least two transmission or reception objects may be transmitted or received using different manners; if the base station type is a global base station or a conventional base station, the at least two transmission or reception objects may be transmitted or received using a same manner. Further, for each base station type, during transmission or reception of the at least two transmission or reception objects, at least one of a waveform, an initialization parameter, a scrambling scheme, a sequence, a phase, or a rotation phase used has a correspondence with the band or subband or band combination or FR. That is, when determining the transmission or reception manner, the terminal may first determine whether to transmit or receive using a same manner or different manners according to the base station type, and then determine at least one of a waveform, an initialization parameter, a scrambling scheme, a sequence, a phase, or a rotation phase used in transmission or reception according to the band or subband or band combination or FR.

(2) Determining the transmission or reception manner according to a purpose of the at least two transmission or reception objects or a scenario.

A scenario or a purpose has a correspondence with the transmission or reception manner. The scenario may be, for example, a terrestrial network (Terrestrial Network, TN) or a non-terrestrial network (Non-Terrestrial Network, NTN). The purpose of the at least two transmission or reception objects may include, for example: cell search (cell search), assisting in determining timing advance (Timing Advance, TA), validation (validation), TA validation, beam management (beam management, BM), measurement, continuously present objects, objects that are mandatorily transmitted or received, objects that are triggered on demand, or objects that are transmitted or received on demand.

Taking determining the transmission or reception manner for the at least two transmission or reception objects according to the scenario as an example, for example, the at least two transmission or reception objects may be transmitted or received using a same manner in a TN scenario and using different manners in an NTN scenario. Alternatively, the at least two transmission or reception objects may be transmitted or received using different manners in a TN scenario and using a same manner in an NTN scenario.

(3) Determining the transmission or reception manner according to type information of the at least two transmission or reception objects or attribute information corresponding to the at least two transmission or reception objects.

The type information or attribute information of the at least two transmission or reception objects has a correspondence with the transmission or reception manner.

The type information of the at least two transmission or reception objects may include, but is not limited to, at least one of the following:
purposes corresponding to the at least two transmission or reception objects (for example, for cell search, assisting in determining timing advance (Timing Advance, TA), validation (validation), TA validation, beam management (beam management, BM), measurement, continuously present objects, objects that are mandatorily transmitted or received (being mandatorily transmitted or received may be interpreted as being inevitably transmitted or received, or being inevitably considered), objects that are triggered on demand, or objects that are transmitted or received on demand. It is specifically noted that transmission or reception herein may be interpreted as sending or receiving;
terminal types corresponding to the at least two transmission or reception objects (for example, reduced capability (Reduced Capability, RedCap) terminal, smart phone (smart phone), different types of IoT devices, different types of ambient Internet of Things (Ambient Internet of Things, A-IoT) devices, terminals of different power levels, and different cyclic prefix lengths (cyclic prefix extension, CPE));
network types corresponding to the at least two transmission or reception objects (for example, terrestrial network (Terrestrial Network, TN), non terrestrial network (Non Terrestrial Network, NTN), IoT network, and non-IoT network);
synchronization signal types corresponding to the at least two transmission or reception objects;
broadcast signal type corresponding to the at least two transmission or reception objects;
band width parts (Band Width Part, BWP) corresponding to the at least two transmission or reception objects;
time-frequency resource blocks corresponding to the at least two transmission or reception objects;
duplex modes corresponding to the at least two transmission or reception objects (for example, full duplex (full duplex) and half duplex (half duplex));
access schemes or access methods corresponding to the at least two transmission or reception objects;
cells corresponding to the at least two transmission or reception objects (for example, macro cell (macro cell) and small cell (small cell));
transmission reception point (Transmission Reception Point, TRP) types corresponding to the at least two transmission or reception objects (for example, multi-TRP (MTRP) and single TRP);
waveforms corresponding to the at least two transmission or reception objects (for example, cyclic prefix-orthogonal frequency division multiplexing (Cyclic Prefix-Orthogonal Frequency Division Multiplexing, CP-OFDM) waveform, discrete Fourier transform-spread-orthogonal frequency division multiplexing (Discrete Fourier Transform-Spread-Orthogonal Frequency Division Multiplexing, DFT-S-OFDM) waveform, and orthogonal time and frequency space (orthogonal time and frequency space, OTFS) waveform);
RAN services corresponding to the at least two transmission or reception objects (for example, sensing (sensing) service, NTN service, low-power synchronization signal (LP-SS) service, wake-up signal (Wake-up signal, WUS) service);
network energy-saving features corresponding to the at least two transmission or reception objects (for example, related to SSB long/short period, or whether paging (paging), system information block (System Information Block, SIB), random access channel (Random Access Channel, RACH), or the like is enabled, and periodicity of paging, SIB, or RACH.);
SSB periodicities corresponding to the at least two transmission or reception objects;
measurement periodicities corresponding to the at least two transmission or reception objects;
other related signal periodicities corresponding to the at least two transmission or reception objects (for example, periodicity of paging, SIB, or RACH);
higher layer protocol features corresponding to the at least two transmission or reception objects (for example, whether a higher layer protocol enables a special service, such as data plane, NPN, or simplified protocol stack).

The attribute information of the at least two transmission or reception objects includes, but is not limited to, at least one of the following:
BWP information, time-domain resource information (for example, time-domain resource block), frequency-domain resource information (for example, frequency-domain resource block), duplex mode information, access scheme or method, cell type information, TRP type information, waveform information, RAN service information, energy-saving feature information, period information, higher layer feature information, transmission or reception information, purpose information, terminal information, or network information.

By way of example, the above transmission or reception information may include at least one of the following:
whether transmission or reception objects are transmitted or received a plurality of times in the time domain, whether a plurality of transmission or reception objects are included in the transmission or reception time window of the transmission or reception objects, whether transmission or reception objects are transmitted or received a plurality of times in the frequency domain, whether a plurality of transmission or reception objects are included in a specific bandwidth, whether continuous time-domain transmission or reception is used for transmitting or receiving the transmission or reception objects, whether continuous frequency-domain transmission or reception is used for transmitting or receiving the transmission or reception objects (for example, if when a plurality of transmission or receptions are performed in the frequency domain, whether the transmission or receptions are performed on contiguous resources or with gaps), whether discrete time-domain resources are used for transmitting or receiving the transmission or reception objects (for example, interlace (interlace) transmission or reception is used), whether discrete frequency-domain resources are used for transmitting or receiving the transmission or reception objects (for example, interlace (interlace) transmission or reception is used), whether reference signal sequences corresponding to a plurality of transmission or reception objects are transmitted or received a plurality of times in the time domain, whether reference signal sequences corresponding to a plurality of transmission or reception objects are included in the transmission or reception time window of the transmission or reception objects, whether reference signal sequences corresponding to a plurality of transmission or reception objects are transmitted or received a plurality of times in the frequency domain, whether reference signal sequences corresponding to a plurality of transmission or reception objects are included in a specific bandwidth, whether continuous time-domain transmission or reception is used for transmitting or receiving reference signal sequences corresponding to the transmission or reception objects, whether continuous time-domain transmission or reception is used for transmitting or receiving reference signal sequences corresponding to the transmission or reception objects (for example, if a plurality of transmission or receptions are performed in the frequency domain, whether the transmission or receptions are performed on contiguous resources or with gaps), whether discrete time-domain resources are used for transmitting or receiving reference signal sequences corresponding to the transmission or reception objects (for example, interlace (interlace) transmission or reception is used), or whether discrete frequency-domain resources are used for transmitting or receiving reference signal sequences corresponding to the transmission or reception objects (for example, interlace (interlace) transmission or reception is used).

In some implementations, a predefined correspondence exists between different type information or attribute information and transmitting or receiving using a same manner or different manners. For example, the at least two transmission or reception objects corresponding to type 1 are transmitted or received using different manners (that is, at least one of different waveforms, different initialization parameters, different scrambling sequences, different signal sequences, different phases, or different phase rotations), and the at least two transmission or reception objects corresponding to type 2 are transmitted or received using a same manner (that is, at least one of same waveform, same initialization parameter, same scrambling sequence, same signal sequence, same phase, same phase rotation). Alternatively, the at least two transmission or reception objects corresponding to type 1 are transmitted or received using a same manner, and the at least two transmission or reception objects corresponding to type 2 are transmitted or received using different manners.

In some implementations, a predefined correspondence exists between different types or attribute information and at least one of a waveform, an initialization parameter, a scrambling scheme, a sequence, a phase, or a rotation phase used for transmission or reception. For example, the at least two transmission or reception objects corresponding to type 1 use phase rotation 1 or phase rotation 2 respectively, and the at least two transmission or reception objects corresponding to type 2 use phase rotation 3 or phase rotation 4 respectively.

(4) Determining the transmission or reception manner according to a mobility speed of the terminal.

The mobility speed has a correspondence with the transmission or reception manner. In some implementations, a predefined correspondence exists between the mobility speed and transmitting or receiving using a same manner or different manners, and there may also be a predefined correspondence between the mobility speed and at least one of a waveform, an initialization parameter, a scrambling scheme, a sequence, a phase, or a rotation phase used for transmission or reception. For the terminal, the terminal may obtain its own mobility speed, and then determine the transmission or reception manner for the at least two transmission or reception objects according to the correspondence between the mobility speed and the transmission or reception manner. For the network-side device, the mobility speed of the terminal may be obtained based on measurement of one or more physical random access channel (Physical Random Access Channel, PRACH) or sounding reference signal (Sounding Reference Signal, SRS) or phase tracking reference signal (Phase Tracking Reference Signal, PT-RS) or other uplink signal transmission or receptions, or according to information reported by the terminal, and then the transmission or reception manner for the at least two transmission or reception objects is determined based on the correspondence between the mobility speed and the transmission or reception manner.

For example, when the mobility speed of the terminal does not exceed X km/h, the transmission or reception manner for the at least two transmission or reception objects is transmitting or receiving using a same manner, and when the mobility speed of the terminal is greater than X km/h, the transmission or reception manner for the at least two transmission or reception objects is transmitting or receiving using different manners. Alternatively, when the mobility speed of the terminal does not exceed X km/h, the transmission or reception manner for the at least two transmission or reception objects is transmitting or receiving using different manners, and when the mobility speed of the terminal is greater than X km/h, the transmission or reception manner for the at least two transmission or reception objects is transmitting or receiving using a same manner.

(5) Determining the transmission or reception manner according to time information.

The time information has a correspondence with the transmission or reception manner. The time information may be, for example, a frame index, a subframe index, a slot index, a time division duplex (Time Division Duplex(ing), TDD) configuration.

In some implementations, the time information may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception.

(6) Determining the transmission or reception manner according to frequency-domain information.

The frequency-domain information has a correspondence with the transmission or reception manner. The frequency-domain information may be, for example, a bandwidth (bandwidth), a band (band), a band combination (bandcombination), a raster (raster), a step size (step size), and a frequency range (frequency range).

In some implementations, the frequency-domain information may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, when the bandwidth is greater than M1, the transmission or reception manner for the at least two transmission or reception objects is transmitting or receiving using different manners, and when the bandwidth is less than M1, the transmission or reception manner for the at least two transmission or reception objects is transmitting or receiving using a same manner. Alternatively, when the bandwidth is greater than M1, the transmission or reception manner for the at least two transmission or reception objects is transmitting or receiving using a same manner, and when the bandwidth is less than M1, the transmission or reception manner for the at least two transmission or reception objects is transmitting or receiving using different manners.

(7) Determining the transmission or reception manner according to an interval between the at least two transmission or reception objects.

The interval between the at least two transmission or reception objects has a correspondence with the transmission or reception manner. The interval between the at least two transmission or reception objects may be a time interval or a frequency interval.

In some implementations, the interval between the at least two transmission or reception objects may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, when the interval between the at least two transmission or reception objects is greater than M2, the transmission or reception manner for the at least two transmission or reception objects is transmitting or receiving using different manners; when the interval between the at least two transmission or reception objects is less than M2, the transmission or reception manner for the at least two transmission or reception objects is transmitting or receiving using a same manner. Alternatively, when the interval between the at least two transmission or reception objects is greater than M2, the transmission or reception manner for the at least two transmission or reception objects is transmitting or receiving using a same manner; when the interval between the at least two transmission or reception objects is less than M2, the transmission or reception manner for the at least two transmission or reception objects is transmitting or receiving using different manners.

(8) Determining the transmission or reception manner according to a spectrum deployment mode.

The spectrum deployment mode has a correspondence with the transmission or reception manner. The spectrum deployment mode may be, for example, FDD, TDD, or an enhanced duplex mode.

In some implementations, the spectrum deployment mode may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, when the spectrum deployment mode is FDD, the transmission or reception manner for the at least two transmission or reception objects is transmitting or receiving using different manners; when the spectrum deployment mode is TDD, the transmission or reception manner for the at least two transmission or reception objects is transmitting or receiving using a same manner; when the spectrum deployment mode is FD, the transmission or reception manner for the at least two transmission or reception objects is transmitting or receiving using different manners, and the specific waveform, initialization parameter, scrambling sequence, signal sequence, phase, and phase rotation used are related to the deployment mode.

(9) Determining the transmission or reception manner according to output power or transmit power.

The output power or transmit power has a correspondence with the transmission or reception manner. The output power or transmit power may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, when the transmit power is greater than a certain value, the transmission or reception manner for the at least two transmission or reception objects is transmitting or receiving using different manners; when the transmit power is less than a certain value, the transmission or reception manner for the at least two transmission or reception objects is transmitting or receiving using a same manner.

(10) Determining the transmission or reception manner according to configuration of a random access channel (for example, PRACH in 5G), resources of the random access channel, or a preamble format.

The configuration of the random access channel, resources of the random access channel, or a preamble format has a correspondence with the transmission or reception manner.

In some implementations, the configuration of the random access channel, resources of the random access channel, or a preamble format may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, a base station configures PRACH resources or a preamble format used for a UE, and the terminal determines the transmission or reception manner for the at least two transmission or reception objects based on the transmission or reception resources or the preamble format of the PRACH used and a predefined relationship. For example, when the preamble format is a short sequence, the transmission or reception manner for the at least two transmission or reception objects is transmitting or receiving using a same manner; when the preamble format is a long sequence, the transmission or reception manner for the at least two transmission or reception objects is transmitting or receiving using different manners. Alternatively, different restriction sets may correspond to different waveforms, initialization parameters, scrambling sequences, signal sequences, phases, phase rotations, and at least one of a waveform, initialization parameter, scrambling sequence, signal sequence, phase, and phase rotation used for transmission or reception is determined according to the restriction set.

(11) Determining the transmission or reception manner according to a time-domain configuration or a frequency-domain configuration.

The time-domain configuration or frequency-domain configuration has a correspondence with the transmission or reception manner. In some implementations, the time-domain configuration or frequency-domain configuration may have a predefined correspondence with transmitting or receiving using a same manner or different manners, and may also have a predefined correspondence with at least one of a waveform, an initialization parameter, a scrambling scheme, a sequence, a phase, or a rotation phase used for transmission or reception. For example, when a position corresponding to one or more of a channel raster (channel raster), a channel raster + an offset, a channel raster - an offset, a sync raster, a sync raster + an offset, or a sync raster - an offset is used for transmission or reception of the at least two transmission or reception objects, the transmission or reception manner for the at least two transmission or reception objects is transmitting or receiving using a same manner. Alternatively, different manners may be used for transmission or reception. Further, at least one of the specific waveform, initialization parameter, scrambling sequence, signal sequence, phase, phase rotation used is related to the used channel raster or the channel raster + the offset, the channel raster - the offset, the sync raster, the sync raster + the offset, or the sync raster - the offset.

(12) Determining the transmission or reception manner according to whether transmission or reception on one or more channels, carriers, band width parts, or cells is repeated.

Whether transmission or reception on one or more channels, carriers, band width parts, or cells is repeated has a correspondence with the transmission or reception manner. Optionally, in some implementations, whether transmission or reception on one or more channels, carriers, band width parts, or cells is repeated has a predefined correspondence with transmitting or receiving using a same manner or different manners. For example, when transmission or reception on a cell is repeated, the transmission or reception manner for the at least two transmission or reception objects is transmitting or receiving using a same manner; when transmission or reception on a cell is not repeated, the transmission or reception manner for the at least two transmission or reception objects is transmitting or receiving using different manners.

(13) Determining the transmission or reception manner according to a number of repetitions of transmission or reception on one or more channels, carriers, band width parts, or cells.

The number of repetitions of transmission or reception on one or more channels, carriers, band width parts, or cells has a correspondence with the transmission or reception manner. Optionally, in some implementations, the number of repetitions of transmission or reception on one or more channels, carriers, band width parts, or cells has a predefined correspondence with transmitting or receiving using a same manner or different manners. For example, when the number of repetitions of transmission or reception on a cell is greater than a certain value, the transmission or reception manner for the at least two transmission or reception objects is transmitting or receiving using a same manner; when the number of repetitions of transmission or reception on a cell is less than a certain value, the transmission or reception manner for the at least two transmission or reception objects is transmitting or receiving using different manners.

(14) Determining the transmission or reception manner according to a number of transmission or reception objects.

The number of transmission or reception objects has a correspondence with the transmission or reception manner. Optionally, in some implementations, the number of transmission or reception objects may have a predefined correspondence with transmitting or receiving using a same manner or different manners. For example, when the number of transmission or reception objects transmitted or received in an FDM manner exceeds N, the transmission or reception manner for the at least two transmission or reception objects is transmitting or receiving using different manners; when the number of transmission or reception objects transmitted or received in the FDM manner does not exceed N, the transmission or reception manner for the at least two transmission or reception objects is transmitting or receiving using a same manner. Alternatively, when the number of transmission or reception objects transmitted or received in the FDM manner exceeds N, the transmission or reception manner for the at least two transmission or reception objects is transmitting or receiving using a same manner; when the number of transmission or reception objects transmitted or received in the FDM manner does not exceed N, the transmission or reception manner for the at least two transmission or reception objects is transmitting or receiving using different manners.

(15) Determining the transmission or reception manner according to a multiple access scheme.

The multiple access scheme has a correspondence with the transmission or reception manner. Optionally, in some implementations, whether a multiple access scheme is used has a predefined correspondence with transmitting or receiving using a same manner or different manners. For example, if a non-orthogonal multiple access scheme (for example, multi-user multiple input-multiple output (Multi-User Multiple Input-Multiple Output, MU-MIMO)) is used, the transmission or reception manner for the at least two transmission or reception objects is transmitting or receiving using a same manner; if a non-orthogonal multiple access scheme is not used, the transmission or reception manner for the at least two transmission or reception objects is transmitting or receiving using different manners.

Optionally, in some implementations, in the case of determining the transmission or reception manner based on the explicit manner, the terminal determining the transmission or reception manner for the at least two transmission or reception objects may include:
receiving, by the terminal, first information, where the first information indicates the transmission or reception manner; and
determining, by the terminal, the transmission or reception manner according to the first information.

The first information includes, but is not limited to, at least one of the following:
a downlink synchronization related signal;
a MIB;
a system information block (System Information Block) SIB;
a common message or channel;
downlink control information (Downlink Control Information, DCI) or a physical downlink control channel (Physical Downlink Control Channel, PDCCH);
a signal or channel scrambled by a specific radio network temporary identifier (Radio Network Temporary Identifier, RNTI);
a specific RNTI;
a medium access control-control element (Medium Access Control-Control Element, MAC-CE);
radio resource control (Radio Resource Control, RRC).

The downlink synchronization related signal includes a primary synchronization signal (Primary Synchronization Signal, PSS), a secondary synchronization signal (Secondary Synchronization Signal, SSS), or a physical broadcast channel demodulation reference signal (Physical Broadcast Channel Demodulation Reference Signal, PBCH DMRS). In a case that the first information includes the downlink synchronization related signal, the first information indicating the transmission or reception manner may include: indicating the transmission or reception manner via an ID of a synchronization sequence, where the ID of the synchronization sequence includes, but is not limited to, N_ID(1) or N_ID(2). Optionally, the indicating the transmission or reception manner via an ID of a synchronization sequence may include: the ID of the synchronization sequence having a correspondence with the transmission or reception manner, that is, the transmission or reception mode is indicated through the correspondence relationship between the ID of the synchronization sequence and the transmission or reception mode. When determining the transmission or reception manner for the at least two transmission or reception objects based on the downlink synchronization related signal, the terminal may determine the corresponding transmission or reception manner according to the correspondence relationship between the ID of the synchronization sequence and the transmission or reception manner.

The MIB may be a representation form of system message in 6G or any future mobile communication system. In a case that the first information includes a MIB, the first information indicating the transmission or reception manner may include at least one of the following:
the MIB carries a parameter indicating the transmission or reception manner; for example, a corresponding bit exists in the MIB, and the bit may carry a parameter indicating the transmission or reception manner;
indicating the transmission or reception manner via a specific value, where the specific value is a specific value indicated by a parameter indicating a subcarrier offset between a downlink synchronization related signal and a reference grid or reference point (for example, a grid), or a specific value indicated by a parameter indicating a subcarrier offset between an SSB and a reference grid or reference point (for example, between public resource block grids);
indicating the transmission or reception manner via a control resource configuration or a monitoring occasion configuration, where the control resource configuration or the monitoring occasion configuration has a correspondence with the transmission or reception manner.

In the case of indicating the transmission or reception manner via a control resource configuration or a monitoring occasion configuration, for example, the transmission or reception manner may be indicated via a control resource set (CORESET)#0 configuration or a monitoring occasion configuration of Type 0-PDCCH CSS (physical downlink control channel common search space, Physical Downlink Control Channel Common Search Space), where the CORESET#0 configuration or the monitoring occasion configuration of Type 0-PDCCH CSS has a correspondence with the transmission or reception manner. The control resource configuration or the monitoring occasion configuration is associated with at least one of a subcarrier spacing combination, a minimum bandwidth, an SSB, a multiplexing pattern and frequency band of CORESET#0, the above specific value, a specific system frame number, or a spare bit in the MIB. Optionally, in some embodiments, the transmission or reception manner may be indicated by configuring CORESET resources, a search space, or a PDCCH monitoring occasion (Monitoring Occasion, MO) at a specific time-frequency domain position. For example, different waveforms may correspond to CORESET resources, search spaces, or PDCCH MOs at different specific time-frequency domain positions.

When determining the transmission or reception manner for the at least two transmission or reception objects according to the MIB, the terminal may determine the corresponding transmission or reception manner based on the parameter carried in the MIB, or determine the corresponding transmission or reception manner based on a specific value, or determine the corresponding transmission or reception manner based on the correspondence between the control resource configuration or the monitoring occasion configuration and the transmission or reception manner.

The SIB may be at least one of SIB1, RMSI, other SIBs, other system information (Other System Information, OSI), system information in 6G or any future mobile communication system. In a case that the first information includes the SIB, the first information indicating the transmission or reception manner may be carrying signaling of one or more bits in the SIB to indicate the transmission or reception manner. For example, signaling of one or more bits is carried in SIB1 or OSI to indicate the transmission or reception manner. When determining the transmission or reception manner for the at least two transmission or reception objects according to the SIB, the terminal may determine the corresponding transmission or reception manner according to an indication of the signaling in the SIB.

The common message or channel may be a message or channel that may be received by a plurality of terminals, such as common physical downlink shared channel (Common Physical Downlink Shared Channel, Common PDSCH), typically including Msg2 (that is, random access response (Random Access Response, RAR)), Msg4, or MsgB PDSCH. In a case that the first information includes the common message or channel, the first information indicating the transmission or reception manner may include at least one of the following:
carrying the transmission or reception manner via bits or fields of the common message or channel; where the bits or fields may repurpose an existing field or may introduce a new field;
indicating the transmission or reception manner via a logic channel (Logic Channel) ID corresponding to the common message or channel;
indicating the transmission or reception manner via uplink grant (UL grant) information of the common message or channel; for example, indicating the transmission or reception manner via UL grant information in Msg2;
indicating the transmission or reception manner via DMRS resources of the common message or channel; for example, indicating the transmission or reception manner via DMRS resources of a common PDSCH;
indicating the transmission or reception manner via a scrambling sequence of the common message or channel; for example, indicating the transmission or reception manner via a scrambling sequence of a common PDSCH.

When determining the transmission or reception manner for the at least two transmission or reception objects according to the common message or channel, the terminal may determine the corresponding transmission or reception manner according to an indication of at least one of bits or fields in the common message or channel, a logic channel ID corresponding to the common message or channel, uplink grant information of the common message or channel, DMRS resources of the common message or channel, and a scrambling sequence of the common message or channel.

The DCI or PDCCH may be common DCI or common PDCCH, typically including Msg2, Msg4, MsgB PDCCH, SIB1 PDCCH, PDCCH scheduling Msg3 retransmission. In a case that the first information includes the DCI or PDCCH, the first information indicating the transmission or reception manner may include at least one of the following:
carrying the transmission or reception manner via information bits or fields in the DCI or PDCCH; for example, the transmission or reception manner may be directly carried via information bits or fields in a common PDCCH or common DCI, and the bits or fields may repurpose an existing field or may introduce a new field;
indicating the transmission or reception manner via DMRS resources of the DCI or PDCCH; for example, indicating the transmission or reception manner via DMRS resources of a common PDCCH;
indicating the transmission or reception manner via a scrambling sequence of the DCI or PDCCH, for example, indicating the transmission or reception manner via a scrambling sequence of a common PDCCH.

When determining the transmission or reception manner for the at least two transmission or reception objects according to the DCI or PDCCH, the terminal may determine the corresponding transmission or reception manner according to an indication of at least one of information bits or fields in the DCI or PDCCH, DMRS resources of the DCI or PDCCH, and a scrambling sequence of the DCI or PDCCH.

In a case that the first information includes a signal or channel scrambled by a specific RNTI, or in a case that the first information includes a specific RNTI, the specific RNTI is determined through at least one of the following manners:
the specific RNTI being configured or indicated; for example, a specific RNTI being configured or indicated by a base station;
determining or generating based on a first RNTI and an offset.

In a case that the specific RNTI is determined or generated based on a first RNTI and an offset, the determining or generating manner may include at least one of the following:
determining or generating based on a random access-radio network temporary identifier (Random Access-Radio Network Temporary Identifier, RA-RNTI) and the offset;
determining or generating based on a system information-radio network temporary identifier (System Information-Radio Network Temporary Identifier, SI-RNTI) and the offset;
determining or generating based on a temporary cell-radio network temporary identifier (Temporary Cell-Radio Network Temporary Identifier, TC-RNTI) and the offset;
determining or generating based on a paging-radio network temporary identifier (Paging-Radio Network Temporary Identifier, P-RNTI) and the offset; and
determining or generating based on a MSGB-radio network temporary identifier (MSGB-Radio Network Temporary Identifier, MSGB-RNTI) and the offset.

In a case that the first information includes a signal or channel scrambled by a specific RNTI, or in a case that the first information includes a specific RNTI, the first information indicating the transmission or reception manner may include: indicating the transmission or reception manner via the offset, where the offset has a correspondence with the transmission or reception manner. When determining the transmission or reception manner for the at least two transmission or reception objects according to a signal or channel scrambled by the specific RNTI, or based on the specific RNTI, the terminal may determine the corresponding transmission or reception manner according to an indication of the specific RNTI, or determine the corresponding transmission or reception manner based on the offset used for determining or generating the specific RNTI and a correspondence between the offset and the transmission or reception manner.

In a case that the first information includes a MAC-CE or RRC, the first information indicating the transmission or reception manner may include:
configuring, via the MAC-CE or RRC, a transmission or reception manner corresponding to at least one factor, where the at least one factor may include at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

Explanations of various factors included in the above at least one factor may refer to the corresponding descriptions of these factors when the terminal determines the transmission or reception manner based on an implicit method, and are not repeated herein.

Optionally, the correspondence between the above at least one factor and the transmission or reception manner may be configured or indicated via a MAC CE or RRC. When determining the transmission or reception manner for the at least two transmission or reception objects according to the MAC-CE or RRC, the terminal may determine according to the correspondence between at least one factor configured by the MAC-CE or RRC and the transmission or reception manner. For example, the network-side device configures, via the RRC, transmission or reception manners corresponding to an FR1 frequency band and an FR2 frequency band respectively. Then when operating in the FR1 frequency band, the terminal may transmit or receive the at least two transmission or reception objects using the transmission or reception manner corresponding to the FR1 frequency band; and when operating in the FR2 frequency band, the terminal may transmit or receive the at least two transmission or reception objects using the transmission or reception manner corresponding to the FR2 frequency band. For another example, the network-side device configures, via the RRC, a transmission or reception manner corresponding to a mobility speed of the terminal being less than 250 km/h, and a transmission or reception manner corresponding to a mobility speed of the terminal being greater than 250 km/h. Then, the terminal may determine to use a corresponding transmission or reception manner to transmit or receive the at least two transmission or reception objects based on its own mobility speed.

Optionally, in some implementations, the terminal may alternatively send its own capability information. For example, the terminal may send its own capability information to a network-side device. In a case of having received the capability information of the terminal, the network-side device may better determine how to transmit or receive (receive or send) the at least two transmission or reception objects according to the capability information. The capability information of the terminal may include at least one of the following:
supporting or using a same manner to transmit or receive the at least two transmission or reception objects;
supporting or using different manners to transmit or receive the at least two transmission or reception objects;
supporting at least one of a waveform, an initialization parameter, a scrambling scheme, a sequence, a phase, or a rotation phase used in transmission or reception (using a same manner or different manners).

Optionally, in some implementations, before entering an RRC connected state, the terminal may transmit or receive the at least two transmission or reception objects in an FDM manner or in a discrete frequency domain. In this case, the terminal determining the transmission or reception manner for the at least two transmission or reception objects may include at least one of the following:
determining the transmission or reception manner according to second information, where the second information includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions;
using different transmission or reception manners at different time-domain positions;
determining transmission or reception in a specified mode as the transmission or reception manner;
determining transmission or reception at a specific position or time as the transmission or reception manner.

Explanations of various information in the above second information may refer to the corresponding descriptions of the information when the terminal determines the transmission or reception manner based on an implicit method, and are not repeated herein.

In one embodiment, taking SSB in 5G (which may also be referred to any module containing at least one of a synchronization signal, a broadcast signal, a broadcast channel (PBCH), a downlink broadcast channel carrying other system message) as an example of the transmission or reception object, a plurality of transmission or reception manners may exist for a first SSB or first N SSBs before the terminal enters an RRC connected state. In this case, a network-side device (for example, a base station) cannot send any indication information related to the transmission or reception manner to the terminal in advance. Therefore, the terminal may determine a transmission or reception manner for the first SSB before entering the RRC connected state by using any of the following several manners.

Manner 1: A one-to-one correspondence exists between the manner used for SSB transmission or reception and the second information.

When transmitting or receiving the SSB, the base station or terminal may select corresponding transmission or reception manners for transmission or reception based on different second information. The second information includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

Manner 2: SSBs in a plurality of transmission or reception manners are transmitted or received at different frequency-domain positions (for example, on different synchronization rasters or at position of a sync raster + an offset) respectively.

The terminal may perform blind detection using a plurality of transmission or reception manners respectively on different sync rasters or at positions corresponding to sync rasters with offsets. Optionally, the frequency-domain positions for a plurality of transmission or receptions of SSBs using the same transmission or reception manner are fixed.

Manner 3: SSBs in a plurality of transmission or reception manners are sent at different time-domain positions respectively.

The terminal may perform blind detection using a plurality of transmission or reception manners respectively at different time-domain positions. Optionally, the time-domain positions for a plurality of transmission or receptions of SSBs using the same transmission or reception manner are periodic.

Manner 4: SSBs in a plurality of transmission or reception manners are transmitted or received in a certain pattern.

For example, an OTFS frame and an OFDM frame coexist in a TDM or CDM manner.

Manner 5: SSBs in a plurality of transmission or reception manners are sent at specific positions or times.

After the terminal enters an RRC connected state, for subsequent transmission or reception objects, the terminal, when performing transmission or reception, may determine transmission or reception manners based on the implicit method or explicit method described above. Optionally, in one embodiment, the terminal receives an SSB using a default transmission or reception manner, and the SSB carries indication information of transmission or reception manners for subsequent transmission or reception objects. The indication information may be several bits explicitly carried in the MIB, or may be indicated by a specific value (for example, a specific value indicated by a subcarrier offset parameter between the SSB and a reference grid or reference point). After receiving the SSB, the terminal may obtain the transmission or reception manner indication information for subsequent transmission or reception objects (for example, SIB1), and then the terminal may transmit or receive subsequent transmission or reception objects using transmission or reception manners determined in the transmission or reception manner indication information. The transmission or reception manner indication information in the SSB may indicate only a transmission or reception manner for a next transmission or reception object, or transmission or reception manners for subsequent N transmission or reception objects, or transmission or reception manners for subsequent one or more downlink transmission or reception objects, or transmission or reception manners for subsequent one or more uplink transmission or reception objects. Optionally, if the transmission or reception manner indication information in the SSB only indicates a transmission or reception manner for a next transmission or reception object (for example, SIB1), then a transmission or reception manner for a transmission or reception object after SIB1 may be indicated in SIB1.

Optionally, in some implementations, the terminal determining the transmission or reception manner for the at least two transmission or reception objects may further include:
determining, by the terminal, the transmission or reception manner according to a transmission or reception capability supported by the terminal or a related capability of the transmission or reception capability supported by the terminal, that the transmission or reception capability or the related capability of the transmission or reception capability has a correspondence with the transmission or reception manner.

The transmission or reception capability may include at least one of the following: supporting or using a same manner to transmit or receive the at least two transmission or reception objects; supporting or using different manners to transmit or receive the at least two transmission or reception objects; supporting or using at least one of a waveform, an initialization parameter, a scrambling scheme, a sequence, a phase, or a rotation phase used when transmitting or receiving the at least two transmission or reception objects using different manners. When determining the transmission or reception object according to the transmission or reception capability, for example, if the terminal has a capability to receive transmission or reception objects (for example, SSBs) subjected to phase rotation, the terminal, when receiving a plurality of transmission or reception objects, may detect transmission or reception objects subjected to phase rotation, or the base station may send transmission or reception objects subjected to phase rotation. For another example, if the terminal has a capability to simultaneously search for and detect transmission or reception objects (for example, SSBs) generated using different initialization parameters, the terminal, when receiving a plurality of transmission or reception objects, may receive transmission or reception objects generated using different initialization parameters, or the base station may send transmission or reception objects generated using different initialization parameters.

The related capability of the transmission or reception capability may be, for example, a scenario supported by the terminal (for example, TN or NTN). The related capability of the transmission or reception capability has a correspondence with the transmission or reception manner. For example, the terminal may simultaneously support operation in both TN and NTN scenarios. In this case, transmission or reception objects in different scenarios may be generated using different methods, so the terminal may receive or send at least two transmission or reception objects generated using different methods, or the base station may send or receive at least two transmission or reception objects generated using different methods.

Optionally, in some implementations, in a case that the terminal transmits or receives at least one transmission or reception object, the method may further include:
in a case that at least one transmission or reception object in the at least one transmission or reception object includes at least a first part and a second part, transmitting or receiving the first part using DFT-s-OFDM, and transmitting or receiving the second part using CP-OFDM.

The at least one transmission or reception object here may be one or more transmission or reception objects in the at least two transmission or reception objects in S202, in which case the at least one transmission or reception object is transmitted or received in an FDM manner or in a discrete frequency domain. Alternatively, the at least one transmission or reception object may be transmission or reception objects other than the at least two transmission or reception objects in S202, in which case the at least one transmission or reception object is not required to be transmitted or received in an FDM manner or in a discrete frequency domain.

For example, for one SSB, when the terminal transmits or receives the SSB, a part of the SSB (for example, PBCH or PBCH DMRS) may be transmitted or received using DFT-s-OFDM, and another part (for example, PSS or SSS) may be transmitted or received using CP-OFDM. The one SSB may be transmitted or received in an FDM manner or in a discrete frequency domain, or may not be transmitted or received in an FDM manner or in a discrete frequency domain.

Optionally, in one embodiment, when the terminal transmits or receives at least two transmission or reception objects, the at least two transmission or reception objects may be transmitted or received using DFT-s-OFDM, or in a case that the at least two transmission or reception objects are contiguous in frequency domain, or a frequency-domain interval between the at least two transmission or reception objects is less than a preset value, the at least two transmission or reception objects are transmitted or received using DFT-s-OFDM.

In the embodiments of the present application, when a terminal sends or receives in an FDM manner or in a discrete frequency domain (the network-side device receives or sends in an FDM manner or in a discrete frequency domain) a plurality of transmission or reception objects, for one or at least two of the transmission or reception objects, a same manner or different manners may be used for transmission or reception, and when transmitting or receiving using a same manner or different manners, the terminal may use at least one of a same or different waveforms, initialization parameters, scrambling schemes, sequences, phases, or rotation phases for transmission or reception. Accordingly, in a scenario of transmitting or receiving a plurality of transmission or reception objects in an FDM manner or in a discrete frequency domain, the terminal and the network-side device may select an appropriate transmission or reception manner for transmission or reception, thereby reducing PAPR and ensuring coverage.

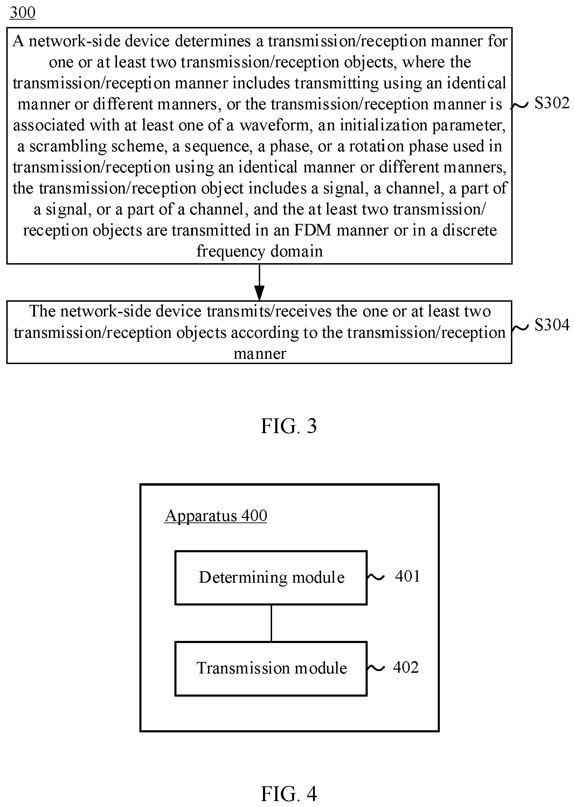

As shown in FIG. 3, embodiments of the present application provide a transmission or reception method 300, which may be performed by a network-side device. In other words, the transmission or reception method may be performed by software or hardware installed in the network-side device. The transmission or reception method includes the following steps.

S302: A network-side device determines a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in an FDM manner or in a discrete frequency domain.

S304: The network-side device transmits or receives the one or at least two transmission or reception objects according to the transmission or reception manner.

When the network-side device transmits (receives or sends) a plurality of transmission or reception objects in an FDM manner or in a discrete frequency domain, for one or at least two of the transmission or reception objects, a transmission or reception manner (receiving manner or sending manner) for the one or at least two transmission or reception objects may be determined, and then the one or at least two transmission or reception objects are transmitted or received in the determined transmission or reception manner.

The at least two transmission or reception objects may be part of the plurality of transmission or reception objects, or all of the plurality of transmission or reception objects, which is not specifically limited herein. For each transmission or reception object, the transmission or reception object may be a signal, a channel, a part of a signal, or a part of a channel. Correspondingly, the at least two transmission or reception objects may be at least two signals, at least two channels, parts of at least two signals, or parts of at least two channels, or may be any combination among the following four items: at least one signal, at least one channel, a part of at least one signal, and a part of at least one channel. For example, the at least two transmission or reception objects may be two signals, two channels, two parts of one signal, two parts of one channel, a part of one signal and a part of another signal, a part of one signal and a part of one channel, a part of one channel and a part of another channel, one signal and a part of another signal, or one channel and a part of another channel, which are not described one by one herein.

Optionally, in some implementations, the transmission or reception object may include, but is not limited to, at least one of the following:
synchronization signal; broadcast signal; SSB; MIB; RO; PO; PF; PUSCH occasion; carrier; search space set.

Optionally, the at least two transmission or reception objects may be of a same type of signal. For example, the at least two transmission or reception objects may all are synchronization signals or broadcast channels, such as PUCCHs.

A transmission or reception manner for one transmission or reception object may include at least one of a waveform, an initialization parameter, a scrambling scheme, a sequence, a phase, or a rotation phase used when transmitting or receiving the object.

The transmission or reception manner for the at least two transmission or reception objects may be transmitting or receiving the at least two transmission or reception objects using a same manner, or transmitting or receiving the at least two transmission or reception objects using different manners, or at least one of a waveform, an initialization parameter, a scrambling scheme, a sequence, a phase, or a rotation phase used when transmitting or receiving the at least two transmission or reception objects using a same manner, or at least one of a waveform, an initialization parameter, a scrambling scheme, a sequence, a phase, or a rotation phase used when transmitting or receiving the at least two transmission or reception objects using different manners. Accordingly, when transmitting or receiving the at least two transmission or reception objects, the network-side device may select an appropriate transmission or reception manner, thereby reducing PAPR and ensuring coverage.

In the case of transmitting or receiving the at least two transmission or reception objects using different manners, optionally, in some implementations, the transmitting or receiving using different manners may satisfy at least one of the following:
the at least two transmission or reception objects are indifferent waveforms; where the waveform may include, but is not limited to, at least one of multicarrier waveform, single-carrier waveform, OTFS waveform, low-power waveform, Chirp waveform, FMCW waveform, LFM waveform, amplitude modulation waveform, frequency modulation waveform, and phase modulation waveform; the multicarrier waveform may be, for example, CP-OFDM, FBMC, GFDM, UFMC, or F-OFDM; the single-carrier waveform may be, for example, DFT-s-OFDM, constant envelope waveform, or SC-FDE; the OTFS waveform is mainly for high speed or large payload; and the low-power waveform may be, for example, UWB;
the at least two transmission or reception objects are generated based on different initialization parameters, for example, based on different N_ID1s, N_ID2s, physical cell identifiers (Physical Cell Identifier, PCI), or indexes;
the at least two transmission or reception objects use different scrambling schemes, for example, using different scrambling code sequences for scrambling;
the at least two transmission or reception objects use different sequences, for example, using different types of sequences (for example, golden sequence, m-sequence, zc sequence), or using different sequences of a same type;
the at least two transmission or reception objects use different phases or phase rotations.

When determining the transmission or reception manner for the at least two transmission or reception objects, the network-side device may determine based on an implicit method. The implicit method may include determining, by the network-side device, the transmission or reception manner according to related information when transmitting or receiving the at least two transmission or reception objects and a correspondence between the related information and the transmission or reception manner. The transmission or reception manner determined according to the implicit method may be transmitting or receiving the at least two transmission or reception objects using a same manner or different manners, or may be at least one of a waveform, an initialization parameter, a scrambling scheme, a sequence, a phase, or a rotation phase used when transmitting or receiving the at least two transmission or reception objects using a same manner or different manners.

Optionally, in some implementations, in the case of determining the transmission or reception manner based on the implicit manner, the network-side device determining the transmission or reception manner for the at least two transmission or reception objects may include at least one of the following (1) to (15):
(1) determining the transmission or reception manner according to a band, a subband, a band combination, or a frequency range;
(2) determining the transmission or reception manner according to a purpose of the at least two transmission or reception objects or a scenario;
(3) determining the transmission or reception manner according to type information of the at least two transmission or reception objects or attribute information corresponding to the at least two transmission or reception objects, where the type information includes at least one of purposes, terminal type, network types, synchronization signal types, broadcast signal types, BWPs, time-frequency resource blocks, duplex modes, access schemes or methods, cells, TRPs, waveforms, RAN services, network energy-saving features, SSB periodicities, measurement periodicities, related signal periodicities, or higher layer protocol features, corresponding to the at least two transmission or reception objects, and the attribute information includes at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
(4) determining the transmission or reception manner according to a mobility speed of the terminal;
(5) determining the transmission or reception manner according to time information;
(6) determining the transmission or reception manner according to frequency-domain information;
(7) determining the transmission or reception manner according to an interval between the at least two transmission or reception objects;
(8) determining the transmission or reception manner according to a spectrum deployment mode;
(9) determining the transmission or reception manner according to output power or transmit power;
(10) determining the transmission or reception manner according to configuration of a random access channel, resources of the random access channel, or a preamble format;
(11) determining the transmission or reception manner according to a time-domain configuration or a frequency-domain configuration;
(12) determining the transmission or reception manner according to whether transmission or reception on one or more channels, carriers, band width parts, or cells is repeated;
(13) determining the transmission or reception manner according to a number of repetitions of transmission or reception on one or more channels, carriers, band width parts, or cells;
(14) determining the transmission or reception manner according to a number of transmission or reception objects;
(15) determining the transmission or reception manner according to a multiple access scheme.

Explanations of the above (1) to (15) may refer to the explanations of corresponding content in the embodiment shown in FIG. 2, and are not repeated herein.

Optionally, in some implementations, the network-side device may indicate the transmission or reception manner for the at least two transmission or reception objects to the terminal. Accordingly, when sending or receiving the at least two transmission or reception objects, the network-side device may send or receive based on the indicated transmission or reception manner; correspondingly, when receiving or sending the at least two transmission or reception objects, the terminal may receive or send based on the indicated transmission or reception manner. The transmission or reception manner indicated by the network-side device may be transmitting or receiving the at least two transmission or reception objects using a same manner or different manners, or using at least one of a waveform, an initialization parameter, a scrambling scheme, a sequence, a phase, or a rotation phase used when transmitting or receiving the at least two transmission or reception objects using a same manner or different manners.

Optionally, when the network-side device indicates the transmission or reception manner for the at least two transmission or reception objects to the terminal, the method may include:
sending, by the network-side device, first information, where the first information indicates the transmission or reception manner.

The first information includes, but is not limited to, at least one of the following:
a downlink synchronization related signal; a MIB; a SIB; a common message or channel; DCI or a PDCCH; a signal or channel scrambled by a specific RNTI; a specific RNTI; a MAC-CE; RRC.

The downlink synchronization related signal includes a PSS, an SSS, or a PBCH DMRS. In a case that the first information includes the downlink synchronization related signal, the first information indicating the transmission or reception manner may include: indicating the transmission or reception manner via an ID of a synchronization sequence, where the ID of the synchronization sequence includes, but is not limited to, N_ID(1) or N_ID(2). Optionally, the indicating the transmission or reception manner via the ID of the synchronization sequence may include: the ID of the synchronization sequence having a correspondence with the transmission or reception manner, that is, the transmission or reception manner is indicated through the correspondence relationship between the ID of the synchronization sequence and the transmission or reception manner.

The MIB may be a representation form of system message in 6G or any future mobile communication system. In a case that the first information includes a MIB, the first information indicating the transmission or reception manner may include at least one of the following:
the MIB carries a parameter indicating the transmission or reception manner; for example, a corresponding bit exists in the MIB, and the bit may carry a parameter indicating the transmission or reception manner;
indicating the transmission or reception manner via a specific value, where the specific value is a specific value indicated by a parameter indicating a subcarrier offset between a downlink synchronization related signal and a reference grid or reference point (for example, a grid), or a specific value indicated by a parameter indicating a subcarrier offset between an SSB and a reference grid or reference point (for example, between public resource block grids);
indicating the transmission or reception manner via a control resource configuration or a monitoring occasion configuration, where the control resource configuration or the monitoring occasion configuration has a correspondence with the transmission or reception manner. For example, the transmission or reception manner may be indicated via a control resource set (CORESET)#0 configuration or a monitoring occasion configuration of Type 0-PDCCH CSS, where the CORESET#0 configuration or the monitoring occasion configuration of Type 0-PDCCH CSS has a correspondence with the transmission or reception manner. The control resource configuration or the monitoring occasion configuration is associated with at least one of a subcarrier spacing combination, a minimum bandwidth, an SSB, a multiplexing pattern and frequency band of CORESET#0, the above specific value, a specific system frame number, or a spare bit in the MIB.

Optionally, in some embodiments, the transmission or reception manner may be indicated by configuring CORESET resources, a search space, or a PDCCH monitoring occasion at a specific time-frequency domain position. For example, different waveforms may correspond to CORESET resources, search spaces, or PDCCH MOs at different specific time-frequency domain positions.

The SIB may be at least one of SIB1, RMSI, other SIB, OSI, system information in 6G or any future mobile communication system. In a case that the first information includes the SIB, the first information indicating the transmission or reception manner may be carrying signaling of one or more bits in the SIB to indicate the transmission or reception manner. For example, signaling of one or more bits is carried in SIB1 or OSI to indicate the transmission or reception manner.

The common message or channel may be a message or channel that may be received by a plurality of terminals, such as Common PDSCH, typically including Msg2 (that is, RAR), Msg4, or MsgB PDSCH. In a case that the first information includes the common message or channel, the first information indicating the transmission or reception manner may include at least one of the following:
carrying the transmission or reception manner via bits or fields of the common message or channel; where the bits or fields may repurpose an existing field or may introduce a new field;
indicating the transmission or reception manner via a logic channel ID corresponding to the common message or channel;
indicating the transmission or reception manner via uplink grant information of the common message or channel; for example, indicating the transmission or reception manner via UL grant information in Msg2;
indicating the transmission or reception manner via DMRS resources of the common message or channel; for example, indicating the transmission or reception manner via DMRS resources of a common PDSCH;
indicating the transmission or reception manner via a scrambling sequence of the common message or channel; for example, indicating the transmission or reception manner via a scrambling sequence of a common PDSCH.

The DCI or PDCCH may be common DCI or common PDCCH, typically including Msg2, Msg4, MsgB PDCCH, SIB1 PDCCH, PDCCH scheduling Msg3 retransmission. In a case that the first information includes the DCI or PDCCH, the first information indicating the transmission or reception manner may include at least one of the following:
carrying the transmission or reception manner via information bits or fields in the DCI or PDCCH; for example, the transmission or reception manner may be directly carried via information bits or fields in a common PDCCH or common DCI, and the bits or fields may repurpose an existing field or may introduce a new field;
indicating the transmission or reception manner via DMRS resources of the DCI or PDCCH; for example, indicating the transmission or reception manner via DMRS resources of a common PDCCH;
indicating the transmission or reception manner via a scrambling sequence of the DCI or PDCCH, for example, indicating the transmission or reception manner via a scrambling sequence of a common PDCCH.

In a case that the first information includes a signal or channel scrambled by a specific RNTI, or in a case that the first information includes a specific RNTI, the specific RNTI is determined through at least one of the following manners:
the specific RNTI being configured or indicated; for example, the specific RNTI being configured or indicated by a base station;
determining or generating based on a first RNTI and an offset.

In a case that the specific RNTI is determined or generated based on the first RNTI and the offset, the determining or generating manner may include at least one of the following:
determining or generating based on a RA-RNTI and an offset;
determining or generating based on a SI-RNTI and an offset;
determining or generating based on a TC-RNTI and an offset;
determining or generating based on a P-RNTI and an offset; and
determining or generating based on a MSGB-RNTI and an offset.

In a case that the first information includes a signal or channel scrambled by a specific RNTI, or in a case that the first information includes a specific RNTI, the first information indicating the transmission or reception manner may include: indicating the transmission or reception manner via the offset, where the offset has a correspondence with the transmission or reception manner.

In a case that the first information includes a MAC-CE or RRC, the first information indicating the transmission or reception manner may include:
configuring, via the MAC-CE or RRC, a transmission or reception manner corresponding to at least one factor, where the at least one factor may include at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

Explanations of various factors included in the above at least one factor may refer to the corresponding descriptions of these factors when the terminal determines the transmission or reception manner based on an implicit method in the embodiment shown in FIG. 2, and are not repeated herein.

Optionally, the correspondence between the above at least one factor and the transmission or reception manner may be configured or indicated by the network-side device via a MAC CE or RRC.

Optionally, in some implementations, the network-side device may also receive capability information of the terminal. Accordingly, the network-side device may better determine how to transmit or receive (receive or send) the at least two transmission or reception objects according to the capability information of the terminal. The capability information of the terminal may include at least one of the following:
supporting or using a same manner to transmit or receive the at least two transmission or reception objects;
supporting or using different manners to transmit or receive the at least two transmission or reception objects;
supporting at least one of a waveform, an initialization parameter, a scrambling scheme, a sequence, a phase, or a rotation phase used in transmission or reception (using a same manner or different manners).

Optionally, in some implementations, before entering an RRC connected state, the network-side device may transmit or receive the at least two transmission or reception objects in an FDM manner or in a discrete frequency domain. In this case, the network-side device determining the transmission or reception manner for the at least two transmission or reception objects may include at least one of the following:
determining the transmission or reception manner according to second information, where the second information includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions; for example, SSBs in a plurality of transmission or reception manners are transmitted or received at different frequency-domain positions (for example, on different synchronization rasters or at position of a sync raster + an offset) respectively;
using different transmission or reception manners at different time-domain positions; for example, SSBs in a plurality of transmission or reception manners are sent at different time-domain positions respectively;
determining transmission or reception in a specified mode as the transmission or reception manner; for example, SSBs in a plurality of transmission or reception manners are transmitted or received in a certain pattern;
determining transmission or reception at a specific position or time as the transmission or reception manner; for example, SSBs in a plurality of transmission or reception manners are transmitted or received at specific positions or times.

After the network-side device enters an RRC connected state, for subsequent transmission or reception objects, the network-side device, when performing transmission or reception, may determine transmission or reception manners based on the implicit method described above, or indicate the transmission or reception manner to the terminal via the first information. Optionally, in one embodiment, taking SSB in 5G (which may also be called any module containing at least one of synchronization signal, broadcast signal, broadcast channel (PBCH), other system message downlink broadcast channel) as an example of the transmission or reception object, the terminal receives an SSB using a default transmission or reception manner, and the SSB carries indication information of transmission or reception manners for subsequent transmission or reception objects. The indication information may be several bits explicitly carried in the MIB, or may be indicated by a specific value (for example, a specific value indicated by a subcarrier offset parameter between the SSB and a reference grid or reference point). After receiving the SSB, the terminal may obtain the transmission or reception manner indication information for subsequent transmission or reception objects (for example, SIB1), and then the terminal may transmit or receive subsequent transmission or reception objects using transmission or reception manners determined in the transmission or reception manner indication information. The transmission or reception manner indication information in the SSB may indicate only a transmission or reception manner for a next transmission or reception object, or transmission or reception manners for subsequent N transmission or reception objects, or transmission or reception manners for subsequent one or more downlink transmission or reception objects, or transmission or reception manners for subsequent one or more uplink transmission or reception objects. Optionally, if the transmission or reception manner indication information in the SSB only indicates a transmission or reception manner for a next transmission or reception object (for example, SIB1), then a transmission or reception manner for a transmission or reception object after SIB1 may be indicated in SIB1.

Optionally, in some implementations, the network-side device determining the transmission or reception manner for the at least two transmission or reception objects may further include:
determining, by the network-side device, the transmission or reception manner according to a transmission or reception capability supported by the network-side device or a related capability of the transmission or reception capability, where the transmission or reception capability or related capability of the transmission or reception capability has a correspondence with the transmission or reception manner.

The transmission or reception capability may include at least one of the following: supporting or using a same manner to transmit or receive the at least two transmission or reception objects; supporting or using different manners to transmit or receive the at least two transmission or reception objects; supporting or using at least one of a waveform, an initialization parameter, a scrambling scheme, a sequence, a phase, or a rotation phase used when transmitting or receiving the at least two transmission or reception objects using different manners. When determining the transmission or reception object according to the transmission or reception capability, for example, if the network-side device has a capability to receive transmission or reception objects (for example, SSBs) subjected to phase rotation, the network-side device, when sending a plurality of transmission or reception objects, may send transmission or reception objects subjected to phase rotation, or the terminal may detect transmission or reception objects subjected to phase rotation. For another example, if the network-side device has the capability to simultaneously search for and detect transmission or reception objects (for example, SSBs) generated using different initialization parameters, the network-side device, when receiving a plurality of transmission or reception objects, may receive transmission or reception objects generated using different initialization parameters, or the terminal may send transmission or reception objects generated using different initialization parameters.

The related capability of the transmission or reception capability may be, for example, a scenario supported by the network-side device (for example, TN or NTN). The related capability of the transmission or reception capability has a correspondence with the transmission or reception manner. For example, the network-side device may simultaneously support operation in TN and NTN scenarios. In this case, transmission or reception objects in different scenarios may be generated using different methods, so the network-side device may receive or send at least two transmission or reception objects generated using different methods, or the terminal may send or receive at least two transmission or reception objects generated using different methods.

Optionally, in some implementations, in a case that the network-side device transmits or receives at least one transmission or reception object, the method may further include:
in a case that at least one transmission or reception object in the at least one transmission or reception object includes at least a first part and a second part, transmitting or receiving the first part using DFT-s-OFDM, and transmitting or receiving the second part using CP-OFDM.

The at least one transmission or reception object here may be one or more transmission or reception objects in the at least two transmission or reception objects in S302, in which case the at least one transmission or reception object is transmitted or received in an FDM manner or in a discrete frequency domain. Alternatively, the at least one transmission or reception object may be transmission or reception objects other than the at least two transmission or reception objects in S302, in which case the at least one transmission or reception object is not required to be transmitted or received in an FDM manner or in a discrete frequency domain.

For example, for one SSB, when the network-side device transmits or receives the SSB, a part of the SSB (for example, PBCH or PBCH DMRS) may be transmitted or received using DFT-s-OFDM, and another part (for example, PSS or SSS) may be transmitted or received using CP-OFDM. The one SSB may be transmitted or received in an FDM manner or in a discrete frequency domain, or may not be transmitted or received in an FDM manner or in a discrete frequency domain.

Optionally, in one embodiment, when the network-side device transmits or receives the at least two transmission or reception objects, the at least two transmission or reception objects may be transmitted or received using DFT-s-OFDM, or in a case that the at least two transmission or reception objects are contiguous in frequency domain, or a frequency-domain interval between the at least two transmission or reception objects is less than a preset value, the at least two transmission or reception objects may be transmitted or received using DFT-s-OFDM.

In the embodiments of the present application, when a network-side device sends or receives in an FDM manner or in a discrete frequency domain (the terminal receives or sends in an FDM manner or in a discrete frequency domain) a plurality of transmission or reception objects, for one or at least two of the transmission or reception objects, a same manner or different manners may be used for transmission or reception, and when transmitting or receiving using a same manner or different manners, the network-side device may use at least one of a same or different waveforms, initialization parameters, scrambling schemes, sequences, phases, or rotation phases for transmission or reception. Accordingly, in a scenario of transmitting or receiving a plurality of transmission or reception objects in an FDM manner or in a discrete frequency domain, the terminal and the network-side device may select an appropriate transmission or reception manner for transmission or reception, thereby reducing PAPR and ensuring coverage.

The transmission or reception method provided in the embodiments of the present application may be executed by a transmission or reception apparatus. In the embodiments of the present application, a transmission or reception apparatus executing a transmission or reception method is taken as an example to illustrate the transmission or reception apparatus provided in the embodiments of the present application.

FIG. 4 is a schematic structural diagram of a transmission or reception apparatus according to embodiments of the present application. The apparatus may correspond to a terminal in other embodiments. As shown in FIG. 4, the apparatus 400 includes the following modules:
a determining module 401, configured to determine a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in a frequency division multiplexing FDM manner or in a discrete frequency domain; and
a transmission or reception module 402, configured to transmit or receive the one or at least two transmission or reception objects according to the transmission or reception manner.

Optionally, in some implementations, the transmitting or receiving using different manners satisfies at least one of the following:
the at least two transmission or reception objects are indifferent waveforms;
the at least two transmission or reception objects are generated based on different initialization parameters;
the at least two transmission or reception objects use different scrambling schemes;
the at least two transmission or reception objects use different sequences;
the at least two transmission or reception objects use different phases or phase rotations.

Optionally, in some implementations, the transmission or reception object includes at least one of the following:
synchronization signal; broadcast signal; synchronization signal block SSB; master information block MIB; random access channel occasion RO; paging occasion PO; paging frame PF; physical uplink shared channel PUSCH occasion; carrier; search space set SearchSpace set.

Optionally, in some implementations, the determining module 401 is configured to perform at least one of the following:
determining the transmission or reception manner according to a band, a subband, a band combination, or a frequency range;
determining the transmission or reception manner according to a purpose of the at least two transmission or reception objects or a scenario;
determining the transmission or reception manner according to type information of the at least two transmission or reception objects or attribute information corresponding to the at least two transmission or reception objects, where the type information includes at least one of a purpose corresponding to the at least two transmission or reception objects, a terminal type, a network type, a synchronization signal type, a broadcast signal type, a band width part BWP, time-frequency resource blocks, a duplex mode, an access scheme or method, a cell, a transmission reception point TRP, a waveform, a radio access network RAN service, a network energy-saving feature, a synchronization signal block SSB period, a measurement period, a related signal period, or a higher layer protocol feature; and the attribute information includes at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
determining the transmission or reception manner according to a mobility speed of the terminal;
determining the transmission or reception manner according to time information;
determining the transmission or reception manner according to frequency-domain information;
determining the transmission or reception manner according to an interval between the at least two transmission or reception objects;
determining the transmission or reception manner according to a spectrum deployment mode;
determining the transmission or reception manner according to output power or transmit power;
determining the transmission or reception manner according to configuration of a random access channel, resources of the random access channel, or a preamble format;
determining the transmission or reception manner according to a time-domain configuration or a frequency-domain configuration;
determining the transmission or reception manner according to whether transmission or reception on one or more channels, carriers, band width parts, or cells is repeated;
determining the transmission or reception manner according to a number of repetitions of transmission or reception on one or more channels, carriers, band width parts, or cells;
determining the transmission or reception manner according to a number of transmission or reception objects;
determining the transmission or reception manner according to a multiple access scheme.

Optionally, in some implementations, the transmission or reception module 402 is further configured to receive first information, where the first information indicates the transmission or reception manner; and
the determining module 401 is configured to determine the transmission or reception manner according to the first information.

Optionally, in some implementations, the first information includes at least one of the following:
a downlink synchronization related signal, where the downlink synchronization related signal includes a primary synchronization signal PSS, a secondary synchronization signal SSS, or a physical broadcast channel demodulation reference signal PBCH DMRS;
a MIB;
system information block SIB;
a common message or channel;
downlink control information DCI or a physical downlink control channel PDCCH;
a signal or channel scrambled by a specific radio network temporary identifier RNTI;
a specific RNTI;
a medium access control-control element MAC-CE;
radio resource control RRC.

Optionally, in some implementations, in a case that the first information includes the downlink synchronization related signal, the first information indicating the transmission or reception manner includes:
indicating the transmission or reception manner via an ID of a synchronization sequence, where the ID of the synchronization sequence includes N_ID(1) or N_ID(2).

Optionally, in some implementations, the indicating the transmission or reception manner via an ID of a synchronization sequence includes:
the ID of the synchronization sequence having a correspondence with the transmission or reception manner.

Optionally, in some implementations, in a case that the first information includes the MIB, the first information indicating the transmission or reception manner includes at least one of the following:
the MIB carrying a parameter indicating the transmission or reception manner;
indicating the transmission or reception manner via a specific value, where the specific value is a specific value indicated by a parameter indicating a subcarrier offset between a downlink synchronization related signal and a reference grid or reference point, or a specific value indicated by a parameter indicating a subcarrier offset between an SSB and a reference grid or reference point;
indicating the transmission or reception manner via a control resource configuration or a monitoring occasion configuration, where the control resource configuration or the monitoring occasion configuration has a correspondence with the transmission or reception manner.

Optionally, in some implementations, in a case that the first information includes the common message or channel, the first information indicating the transmission or reception manner includes at least one of the following:
carrying the transmission or reception manner via bits or fields of the common message or channel;
indicating the transmission or reception manner via a logic channel ID corresponding to the common message or channel;
indicating the transmission or reception manner via uplink grant information of the common message or channel;
indicating the transmission or reception manner via DMRS resources of the common message or channel;
indicating the transmission or reception manner via a scrambling sequence of the common message or channel.

Optionally, in some implementations, in a case that the first information includes the DCI or PDCCH, the first information indicating the transmission or reception manner includes at least one of the following:
carrying the transmission or reception manner via information bits or fields in the DCI or PDCCH;
indicating the transmission or reception manner via DMRS resources of the DCI or PDCCH;
indicating the transmission or reception manner via a scrambling sequence of the DCI or PDCCH.

Optionally, in some implementations, in a case that the first information includes the signal or channel scrambled by the specific RNTI, or in a case that the first information includes the specific RNTI, the specific RNTI is determined through at least one of the following manners:
the specific RNTI being configured or indicated;
determining or generating based on a first RNTI and an offset.

Optionally, in some implementations, the determining or generating based on a first RNTI and an offset includes at least one of the following:
determining or generating based on a random access-radio network temporary identifier RA-RNTI and an offset;
determining or generating based on a system information-radio network temporary identifier SI-RNTI and an offset;
determining or generating based on a temporary cell-radio network temporary identifier TC-RNTI and an offset;
determining or generating based on a paging-radio network temporary identifier P-RNTI and an offset; and
determining or generating based on a message B-radio network temporary identifier MSGB-RNTI and an offset.

Optionally, in some implementations, the first information indicating the transmission or reception manner includes:
indicating the transmission or reception manner via the offset, where the offset has a correspondence with the transmission or reception manner.

Optionally, in some implementations, in a case that the first information includes the MAC-CE or the RRC, the first information indicating the transmission or reception manner includes:
a transmission or reception manner corresponding to at least one factor being configured via the MAC-CE or the RRC, where the at least one factor includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

Optionally, in some implementations, the correspondence between the at least one factor and the transmission or reception manner is configured or indicated via the MAC CE or the RRC.

Optionally, in some implementations, the transmission or reception module 402 is further configured to:
send capability information; where
the capability information includes at least one of the following:
   supporting or using a same manner to transmit or receive the at least two transmission or reception objects;
   supporting or using different manners to transmit or receive the at least two transmission or reception objects;
   supporting at least one of a waveform, an initialization parameter, a scrambling scheme, a sequence, a phase, or a rotation phase used in transmission or reception.

Optionally, in some implementations, before the terminal enters an RRC connected state, the determining module 401 is configured to perform at least one of the following:
determining the transmission or reception manner according to second information, where the second information includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions;
using different transmission or reception manners at different time-domain positions;
determining transmission or reception in a specified mode as the transmission or reception manner;
determining transmission or reception at a specific position or time as the transmission or reception manner.

Optionally, in some implementations, the determining module 401 is further configured to:
determine the transmission or reception manner according to a transmission or reception capability supported by the terminal or a related capability of the transmission or reception capability, where the transmission or reception capability or the related capability has a correspondence with the transmission or reception manner.

Optionally, in some implementations, in the case of transmitting or receiving at least one transmission or reception object, the transmission or reception module 402 is further configured to:
in a case that at least one transmission or reception object in the at least one transmission or reception object includes at least a first part and a second part, transmit or receive the first part using discrete Fourier transform spread orthogonal frequency division multiplexing DFT-s-OFDM, and transmit or receive the second part using cyclic prefix orthogonal frequency division multiplexing CP-OFDM.

Optionally, in some implementations, the transmission or reception module 402 is further configured to:
in a case that the at least two transmission or reception objects are contiguous in frequency domain, or a frequency-domain interval between the at least two transmission or reception objects is less than a preset value, transmit or receive the at least two transmission or reception objects using DFT-s-OFDM.

The apparatus 400 according to the embodiments of the present application may correspond to the procedure of the method 200 in the embodiments of the present application, and the units/modules in the apparatus 400 and the foregoing other operations and/or functions are separately for implementing corresponding procedures of the method 200, with the same or equivalent technical effects achieved. For brevity, details are not repeated herein.

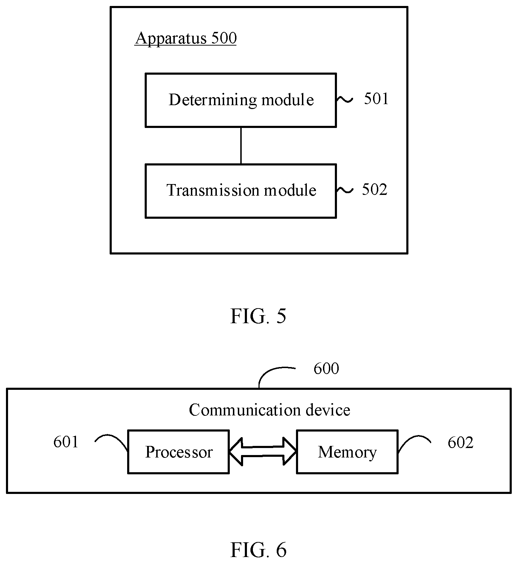

FIG. 5 is a schematic structural diagram of a transmission or reception apparatus according to embodiments of the present application. The apparatus may correspond to a network-side device in other embodiments. As shown in FIG. 5, the apparatus 500 includes the following modules:
a determining module 501, configured to determine a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in an FDM manner or in a discrete frequency domain; and
a transmission or reception module 502, configured to transmit or receive the one or at least two transmission or reception objects according to the transmission or reception manner.

Optionally, in some implementations, the transmitting or receiving using different manners satisfies at least one of the following:
the at least two transmission or reception objects are indifferent waveforms;
the at least two transmission or reception objects are generated based on different initialization parameters;
the at least two transmission or reception objects use different scrambling schemes;
the at least two transmission or reception objects use different sequences;
the at least two transmission or reception objects use different phases or phase rotations.

Optionally, in some implementations, the transmission or reception object includes at least one of the following:
synchronization signal; broadcast signal; SSB; MIB; RO; PO; PF; PUSCH occasion; carrier; search space set.

Optionally, in some implementations, the determining module 501 is configured to perform at least one of the following:
determining the transmission or reception manner according to a band, a subband, a band combination, or a frequency range;
determining the transmission or reception manner according to a purpose of the at least two transmission or reception objects or a scenario;
determining the transmission or reception manner according to type information of the at least two transmission or reception objects or attribute information corresponding to the at least two transmission or reception objects, where the type information includes at least one of a purpose corresponding to the at least two transmission or reception objects, a terminal type, a network type, a synchronization signal type, a broadcast signal type, a band width part BWP, time-frequency resource blocks, a duplex mode, an access scheme or method, a cell, a transmission reception point TRP, a waveform, a radio access network RAN service, a network energy-saving feature, an SSB period, a measurement period, a related signal period, or a higher layer protocol feature; and the attribute information includes at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
determining the transmission or reception manner according to a mobility speed of the terminal;
determining the transmission or reception manner according to time information;
determining the transmission or reception manner according to frequency-domain information;
determining the transmission or reception manner according to an interval between the at least two transmission or reception objects;
determining the transmission or reception manner according to a spectrum deployment mode;
determining the transmission or reception manner according to output power or transmit power;
determining the transmission or reception manner according to configuration of a random access channel, resources of the random access channel, or a preamble format;
determining the transmission or reception manner according to a time-domain configuration or a frequency-domain configuration;
determining the transmission or reception manner according to whether transmission or reception on one or more channels, carriers, band width parts, or cells is repeated;
determining the transmission or reception manner according to a number of repetitions of transmission or reception on one or more channels, carriers, band width parts, or cells;
determining the transmission or reception manner according to a number of transmission or reception objects;
determining the transmission or reception manner according to a multiple access scheme.

Optionally, in some implementations, the transmission or reception module 502 is further configured to:
send first information, where the first information indicates the transmission or reception manner.

Optionally, in some implementations, the first information includes at least one of the following:
a downlink synchronization related signal, where the downlink synchronization related signal includes a PSS, an SSS, or a PBCH DMRS;
a MIB;
a SIB;
a common message or channel;
DCI or a PDCCH;
a signal or channel scrambled by a specific RNTI;
a specific RNTI;
a MAC-CE;
RRC.

Optionally, in some implementations, in a case that the first information includes the downlink synchronization related signal, the first information indicating the transmission or reception manner includes:
indicating the transmission or reception manner via an ID of a synchronization sequence, where the ID of the synchronization sequence includes N_ID(1) or N_ID(2).

Optionally, in some implementations, the indicating the transmission or reception manner via an ID of a synchronization sequence includes:
the ID of the synchronization sequence having a correspondence with the transmission or reception manner.

Optionally, in some implementations, in a case that the first information includes the MIB, the first information indicating the transmission or reception manner includes at least one of the following:
the MIB carrying a parameter indicating the transmission or reception manner;
indicating the transmission or reception manner via a specific value, where the specific value is a specific value indicated by a parameter indicating a subcarrier offset between a downlink synchronization related signal and a reference grid or reference point, or a specific value indicated by a parameter indicating a subcarrier offset between an SSB and a reference grid or reference point;
indicating the transmission or reception manner via a control resource configuration or a monitoring occasion configuration, where the control resource configuration or the monitoring occasion configuration has a correspondence with the transmission or reception manner.

Optionally, in some implementations, in a case that the first information includes the common message or channel, the first information indicating the transmission or reception manner includes at least one of the following:
carrying the transmission or reception manner via bits or fields of the common message or channel;
indicating the transmission or reception manner via a logic channel ID corresponding to the common message or channel;
indicating the transmission or reception manner via uplink grant information of the common message or channel;
indicating the transmission or reception manner via DMRS resources of the common message or channel;
indicating the transmission or reception manner via a scrambling sequence of the common message or channel.

Optionally, in some implementations, in a case that the first information includes the DCI or PDCCH, the first information indicating the transmission or reception manner includes at least one of the following:
carrying the transmission or reception manner via information bits or fields in the DCI or PDCCH;
indicating the transmission or reception manner via DMRS resources of the DCI or PDCCH;
indicating the transmission or reception manner via a scrambling sequence of the DCI or PDCCH.

Optionally, in some implementations, in a case that the first information includes the signal or channel scrambled by the specific RNTI, or in a case that the first information includes the specific RNTI, the specific RNTI is determined through at least one of the following manners:
the specific RNTI being configured or indicated;
determining or generating based on a first RNTI and an offset.

Optionally, in some implementations, the determining or generating based on a first RNTI and an offset includes at least one of the following:
determining or generating based on a RA-RNTI and an offset;
determining or generating based on a SI-RNTI and an offset;
determining or generating based on a TC-RNTI and an offset;
determining or generating based on a P-RNTI and an offset;
determining or generating based on a MSGB-RNTI and an offset.

Optionally, in some implementations, the first information indicating the transmission or reception manner includes:
indicating the transmission or reception manner via the offset, where the offset has a correspondence with the transmission or reception manner.

Optionally, in some implementations, in a case that the first information includes the MAC-CE or the RRC, the first information indicating the transmission or reception manner includes:
a transmission or reception manner corresponding to at least one factor being configured via the MAC-CE or the RRC, where the at least one factor includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

Optionally, in some implementations, the correspondence between the at least one factor and the transmission or reception manner is configured or indicated via the MAC CE or the RRC.

Optionally, in some implementations, the transmission or reception module 502 is further configured to:
receive capability information; where
the capability information includes at least one of the following:
   supporting or using a same manner to transmit or receive the at least two transmission or reception objects;
   supporting or using different manners to transmit or receive the at least two transmission or reception objects;
   supporting at least one of a waveform, an initialization parameter, a scrambling scheme, a sequence, a phase, or a rotation phase used in transmission or reception.

Optionally, in some implementations, the determining module 501 is further configured to perform at least one of the following:
determining the transmission or reception manner according to second information, where the second information includes at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions;
using different transmission or reception manners at different time-domain positions;
determining transmission or reception in a specified mode as the transmission or reception manner;
determining transmission or reception at a specific position or time as the transmission or reception manner.

Optionally, in some implementations, the determining module 501 is further configured to:
determine the transmission or reception manner according to a transmission or reception capability supported by the network-side device or a related capability of the transmission or reception capability, where the transmission or reception capability or the related capability has a correspondence with the transmission or reception manner.

Optionally, in some implementations, in the case of transmitting or receiving at least one transmission or reception object, the transmission or reception module 502 is further configured to:
in a case that at least one transmission or reception object in the at least one transmission or reception object includes at least a first part and a second part, transmit or receive the first part using DFT-s-OFDM, and transmit or receive the second part using CP-OFDM.

Optionally, in some implementations, the transmission or reception module 502 is further configured to:
in a case that the at least two transmission or reception objects are contiguous in frequency domain, or a frequency-domain interval between the at least two transmission or reception objects is less than a preset value, transmit or receive the at least two transmission or reception objects using DFT-s-OFDM.

The apparatus 500 according to the embodiments of the present application may correspond to the procedure of the method 300 in the embodiments of the present application, and the units/modules in the apparatus 500 and the foregoing operations and/or functions are separately for implementing corresponding procedures of the method 300, with the same or equivalent technical effects achieved. For brevity, details are not repeated herein.

The transmission or reception apparatus in the embodiments of the present application may be an electronic device, such as an electronic device with an operating system, or a component in an electronic device, such as an integrated circuit or a chip. The electronic device may be a terminal or a device other than a terminal. By way of example, the terminal may include, but is not limited to, the types of the terminal 11 listed above, and other device may be a server, a network attached storage (Network Attached Storage, NAS), or the like. This is not specifically limited in the embodiments of the present application.

The transmission or reception apparatus provided in the embodiments of the present application can implement the processes implemented in the method embodiments in FIG. 2 and FIG. 3, with the same technical effects achieved. To avoid repetition, details are not repeated herein.

As shown in FIG. 6, embodiments of the present application further provide a communication device 600, including a processor 601 and a memory 602. A program or an instruction executable on the processor 601 is stored on the memory 602. For example, when the communication device 600 is a terminal, the program or instruction, when executed by the processor 601, implements steps of the above embodiments of the transmission or reception method, with the same technical effects achieved. When the communication device 600 is a network-side device, the program or instruction, when executed by the processor 601, implements steps of the above embodiments of the transmission or reception method, with the same technical effects achieved. To avoid repetition, details are not repeated herein.

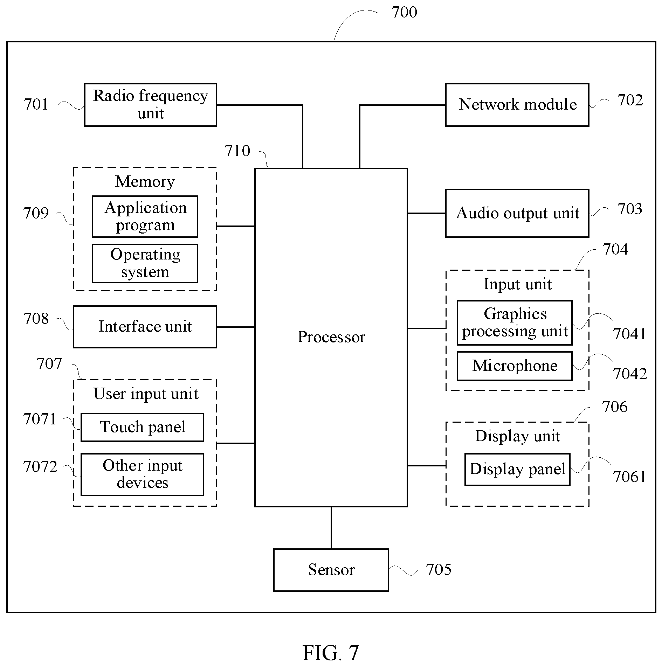

Embodiments of the present application further provide a terminal, including a processor and a communication interface. The communication interface is coupled to the processor, and the processor is configured to run a program or an instruction to implement the steps in the method embodiment shown in FIG. 2. The terminal embodiments correspond to the above terminal-side method embodiments, and the implementation processes and implementations of the above method embodiments may all be applied to the terminal embodiments, with the same technical effects achieved. Specifically, FIG. 7 is a schematic diagram of a hardware structure of a terminal implementing embodiments of the present application.

The terminal 700 includes, but is not limited to, at least some of the components such as a radio frequency unit 701, a network module 702, an audio output unit 703, an input unit 704, a sensor 705, a display unit 706, a user input unit 707, an interface unit 708, a memory 709, and a processor 710.

Those skilled in the art may understand that the terminal 700 may also include a power supply (for example, a battery) for supplying power to the components. The power supply may be logically connected to the processor 710 through a power management system, thereby implementing functions such as charging, discharging, and power consumption management through the power management system. The structure of the terminal shown in FIG. 7 does not constitute any limitation on the terminal. The terminal may include more or fewer components than shown, or combine certain components, or have different component arrangements. Details are not described herein.

It should be understood that, in the embodiments of the present application, the input unit 704 may include a graphics processing unit (Graphics Processing Unit, GPU) 7041 and a microphone 7042. The graphics processing unit 7041 is configured to process image data of still pictures or videos obtained by an image capture device (for example, a camera) in a video capture mode or an image capture mode. The display unit 706 may include a display panel 7061, and the display panel 7061 may be configured in the form of a liquid crystal display, an organic light emitting diode, or the like. The user input unit 707 includes at least one of a touch panel 7071 and other input devices 7072. The touch panel 7071 is also referred to as a touch screen. The touch panel 7071 may include two parts: a touch detection device and a touch controller. The other input devices 7072 may include, but are not limited to, a physical keyboard, a function key (for example, a volume control key or a power on/off key), a trackball, a mouse, and a joystick. Details are not described herein.

In the embodiments of the present application, after receiving downlink data from a network-side device, the radio frequency unit 701 may transmit or receive the downlink data to the processor 710 for processing; in addition, the radio frequency unit 701 may send uplink data to the network-side device. Generally, the radio frequency unit 701 includes, but is not limited to, an antenna, an amplifier, a transceiver, a coupler, a low noise amplifier, and a duplexer.

The memory 709 may be configured to store a software program or instruction and various data. The memory 709 may mainly include a first storage area for storing a program or an instruction and a second storage area for storing data, where the first storage area may store an operating system, an application program. or an instruction required for at least one function (such as a sound playback function or an image playback function), and the like. In addition, the memory 709 may include volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of the present application includes, but is not limited to, these and any other suitable types of memory.

The processor 710 may include one or more processing units. Optionally, the processor 710 integrates an application processor and a modem processor. The application processor primarily processes operations involving an operating system, a user interface, an application program, or the like. The modem processor mainly processes radio communication signals, for example, being a baseband processor. It can be understood that the above modem processor may not be integrated into the processor 710.

The processor 710 is configured to determine a transmission or reception manner for one or at least two transmission or reception objects, where the transmission or reception manner includes transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object includes a signal, a channel, a part of a signal, or a part of a channel, and the at least two transmission or reception objects are transmitted or received in an FDM manner or in a discrete frequency domain. The radio frequency unit 701 is configured to transmit or receive the one or at least two transmission or reception objects according to the transmission or reception manner.

In the embodiments of the present application, when a terminal sends or receives in an FDM manner or in a discrete frequency domain (the network-side device receives or sends in an FDM manner or in a discrete frequency domain) a plurality of transmission or reception objects, for one or at least two of the transmission or reception objects, a same manner or different manners may be used for transmission or reception, and when transmitting or receiving using a same manner or different manners, the terminal may use at least one of a same or different waveforms, initialization parameters, scrambling schemes, sequences, phases, or rotation phases for transmission or reception. Accordingly, in a scenario of transmitting or receiving a plurality of transmission or reception objects in an FDM manner or in a discrete frequency domain, the terminal and the network-side device may select an appropriate transmission or reception manner for transmission or reception, thereby reducing PAPR and ensuring coverage.

It can be understood that for the implementation processes of the implementations mentioned in the embodiments, reference may be made to the relevant descriptions of the method embodiment 200, with the same or corresponding technical effects achieved. To avoid repetition, details are not repeated herein.

Embodiments of the present application further provide a network-side device, including a processor and a communication interface. The communication interface is coupled to the processor, and the processor is configured to run a program or an instruction to implement the steps in the method embodiment shown in FIG. 3. The network-side device embodiments correspond to the above network-side device method embodiments, and the implementation processes and implementations of the above method embodiments may all be applied to the network-side device embodiments, with the same technical effects achieved.

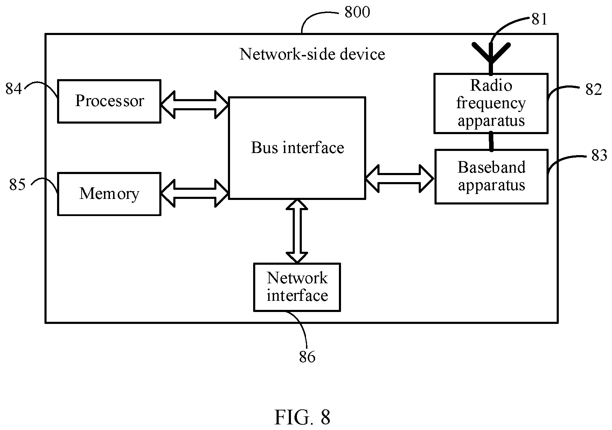

Specifically, embodiments of the present application further provide a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information via the antenna 81 and sends the received information to the baseband apparatus 83 for processing. In a downlink direction, the baseband apparatus 83 processes the information that needs to be sent and sends processed information to the radio frequency apparatus 82, and the radio frequency apparatus 82 processes the received information, and sends processed information out via the antenna 81.

The method executed by the network-side device in the above embodiments may be implemented in the baseband apparatus 83, and the baseband apparatus 83 includes a baseband processor.

The baseband apparatus 83 may include at least one baseband board, on which a plurality of chips are disposed on the baseband board. As shown in FIG. 8, one chip is, for example, a baseband processor, which is connected to the memory 85 through a bus interface to invoke a program in the memory 85 and perform operations of the network device shown in the above method embodiments.

The network-side device may further include a network interface 86, such as a common public radio interface (Common Public Radio Interface, CPRI).

Specifically, the network-side device 800 in the embodiments of the present application further includes an instruction or a program stored on the memory 85 and executable on the processor 84. The processor 84 invokes the instruction or program in the memory 85 to execute the method executed by the modules shown in FIG. 3, with the same technical effects achieved. To avoid repetition, details are not repeated herein.

Embodiments of the present application further provide a readable storage medium, on which a program or an instruction is stored. When the program or instruction is executed by a processor, the processes of the above embodiments of the transmission or reception method are implemented, with the same technical effects achieved. To avoid repetition, details are not repeated herein.

The processor is a processor in the terminal described in the above embodiments. The readable storage medium includes a computer-readable storage medium such as a computer read-only memory ROM, a random access memory RAM, a magnetic disk, or an optical disk. In some embodiments, the readable storage medium may be a non-transitory readable storage medium.

Embodiments of the present application further provide a chip, where the chip includes a processor and a communication interface, the communication interface is coupled to the processor, and the processor is configured to run a program or an instruction to implement the processes of the above embodiments of the transmission or reception method, with the same technical effects achieved. To avoid repetition, details are not repeated herein.

It should be understood that the chip mentioned in the embodiments of the present application may alternatively be referred to as a system-level chip, a system chip, a chip system, or a system on chip.

Embodiments of the present application further provide a computer program/program product, where the computer program/program product is stored in a storage medium, and the computer program/program product is executed by at least one processor to implement the processes of the above embodiments of the transmission or reception method, with the same technical effects achieved. To avoid repetition, details are not repeated herein.

Embodiments of the present application further provide a transmission or reception system including a terminal and a network-side device, where the terminal is configured to perform the steps of the transmission or reception method described above in FIG. 2, and the network-side device is configured to perform the steps of the transmission or reception method described above in FIG. 3.

It should be noted that, in this specification, the terms "include", "comprise" or any other variants thereof are intended to cover non-exclusive inclusion, so that a process, method, article, or apparatus including a series of elements not only includes those elements, but also includes other elements not explicitly listed, or also includes elements inherent to such process, method, article, or apparatus. Without more restrictions, an element defined by the statement "including one ..." does not exclude the existence of another identical element in the process, method, article or apparatus including the element.

Through the description of the above embodiments, those skilled in the art can clearly understand that the above embodiment methods may be implemented by means of a computer software product plus a necessary universal hardware platform, or by hardware. The computer software product is stored in a storage medium (for example, a ROM, a RAM, a magnetic disk, or an optical disk), including several instructions to make a terminal or network-side device execute the methods described in the embodiments of the present application.

The embodiments of the present application have been described above with reference to the accompanying drawings, but the present application is not limited to the above specific implementations. The above specific implementations are merely illustrative and not restrictive. Under the enlightenment of the present application, those of ordinary skill in the art can make many forms of implementations without departing from the purpose of the present application and the scope protected by the claims, and these implementations all fall within the protection of the present application.

## Claims

1. A transmission or reception method comprising:
determining, by a terminal, a transmission or reception manner for one or at least two transmission or reception objects, wherein the transmission or reception manner comprises transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners; the transmission or reception object comprises a signal, a channel, a part of a signal, or a part of a channel, and the at least two transmission or reception objects are transmitted or received in a frequency division multiplexing FDM manner or in a discrete frequency domain; and
transmitting or receiving, by the terminal, the one or at least two transmission or reception objects according to the transmission or reception manner.

2. The method according to claim 1, wherein the transmitting or receiving using different manners satisfies at least one of the following:
the at least two transmission or reception objects are indifferent waveforms;
the at least two transmission or reception objects are generated based on different initialization parameters;
the at least two transmission or reception objects use different scrambling schemes;
the at least two transmission or reception objects use different sequences;
the at least two transmission or reception objects use different phases or phase rotations.

3. The method according to claim 1, wherein the determining, by a terminal, a transmission or reception manner for at least two transmission or reception objects comprises at least one of the following:
determining the transmission or reception manner according to a band, a subband, a band combination, or a frequency range;
determining the transmission or reception manner according to a purpose of the at least two transmission or reception objects or a scenario;
determining the transmission or reception manner according to type information of the at least two transmission or reception objects or attribute information corresponding to the at least two transmission or reception objects, wherein the type information comprises at least one of a purpose corresponding to the at least two transmission or reception objects, a terminal type, a network type, a synchronization signal type, a broadcast signal type, a band width part BWP, time-frequency resource blocks, a duplex mode, an access scheme or method, a cell, a transmission reception point TRP, a waveform, a radio access network RAN service, a network energy-saving feature, an SSB period, a measurement period, a related signal period, or a higher layer protocol feature; and the attribute information comprises at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
determining the transmission or reception manner according to a mobility speed of the terminal;
determining the transmission or reception manner according to time information;
determining the transmission or reception manner according to frequency-domain information;
determining the transmission or reception manner according to an interval between the at least two transmission or reception objects;
determining the transmission or reception manner according to a spectrum deployment mode;
determining the transmission or reception manner according to output power or transmit power;
determining the transmission or reception manner according to configuration of a random access channel, resources of the random access channel, or a preamble format;
determining the transmission or reception manner according to a time-domain configuration or a frequency-domain configuration;
determining the transmission or reception manner according to whether transmission or reception on one or more channels, carriers, band width parts, or cells is repeated;
determining the transmission or reception manner according to a number of repetitions of transmission or reception on one or more channels, carriers, band width parts, or cells;
determining the transmission or reception manner according to a number of transmission or reception objects;
determining the transmission or reception manner according to a multiple access scheme.

4. The method according to claim 1, wherein the method further comprises:
receiving, by the terminal, first information; and
determining, by the terminal, the transmission or reception manner according to the first information; wherein
the first information comprises at least one of the following:
a downlink synchronization related signal, wherein the downlink synchronization related signal comprises a primary synchronization signal PSS, a secondary synchronization signal SSS, or a physical broadcast channel demodulation reference signal PBCH DMRS;
a MIB;
a system information block SIB;
a common message or channel;
downlink control information DCI or a physical downlink control channel PDCCH;
a signal or channel scrambled by a specific radio network temporary identifier RNTI;
a specific RNTI;
a medium access control-control element MAC-CE;
radio resource control RRC.

5. The method according to claim 4, wherein, in a case that the first information comprises the downlink synchronization related signal, the first information indicating the transmission or reception manner comprises:
indicating the transmission or reception manner via an ID of a synchronization sequence, wherein the ID of the synchronization sequence comprises N_ID(1) or N_ID(2).

6. The method according to claim 4, wherein, in a case that the first information comprises the MIB, the first information indicating the transmission or reception manner comprises at least one of the following:
the MIB carrying a parameter indicating the transmission or reception manner;
indicating the transmission or reception manner via a specific value, wherein the specific value is a specific value indicated by a parameter indicating a subcarrier offset between a downlink synchronization related signal and a reference grid or reference point, or a specific value indicated by a parameter indicating a subcarrier offset between an SSB and a reference grid or reference point;
indicating the transmission or reception manner via a control resource configuration or a monitoring occasion configuration, wherein the control resource configuration or the monitoring occasion configuration has a correspondence with the transmission or reception manner.

7. The method according to claim 4, wherein, in a case that the first information comprises the signal or channel scrambled by the specific RNTI, or in a case that the first information comprises the specific RNTI, the specific RNTI is determined through at least one of the following manners:
the specific RNTI being configured or indicated;
determining or generating based on a first RNTI and an offset.

8. The method according to claim 4, wherein, in a case that the first information comprises the MAC-CE or the RRC, the first information indicating the transmission or reception manner comprises:
a transmission or reception manner corresponding to at least one factor being configured via the MAC-CE or the RRC, wherein the at least one factor comprises at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme.

9. The method according to claim 1, wherein the method further comprises:
sending, by the terminal, capability information; wherein
the capability information comprises at least one of the following:
supporting or using a same manner to transmit or receive the at least two transmission or reception objects;
supporting or using different manners to transmit or receive the at least two transmission or reception objects;
supporting at least one of a waveform, an initialization parameter, a scrambling scheme, a sequence, a phase, or a rotation phase used in transmission or reception.

10. The method according to any one of claims 1 to 8, wherein, before the terminal enters an RRC connected state, the determining, by a terminal, a transmission or reception manner for at least two transmission or reception objects comprises at least one of the following:
determining the transmission or reception manner according to second information, wherein the second information comprises at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions;
using different transmission or reception manners at different time-domain positions;
determining transmission or reception in a specified mode as the transmission or reception manner;
determining transmission or reception at a specific position or time as the transmission or reception manner.

11. The method according to any one of claims 1 to 8, wherein the determining, by a terminal, a transmission or reception manner for at least two transmission or reception objects further comprises:
determining, by the terminal, the transmission or reception manner according to a transmission or reception capability supported by the terminal or a related capability of the transmission or reception capability, wherein the transmission or reception capability or the related capability has a correspondence with the transmission or reception manner.

12. The method according to claim 1, wherein, in a case that the terminal transmits or receives at least one transmission or reception object, the method further comprises:
in a case that at least one transmission or reception object in the at least one transmission or reception object comprises at least a first part and a second part, transmitting or receiving the first part using discrete Fourier transform spread orthogonal frequency division multiplexing DFT-s-OFDM, and transmitting or receiving the second part using cyclic prefix orthogonal frequency division multiplexing CP-OFDM.

13. The method according to claim 1, wherein the method further comprises:
in a case that the at least two transmission or reception objects are contiguous in frequency domain, or a frequency-domain interval between the at least two transmission or reception objects is less than a preset value, transmitting or receiving, by the terminal, the at least two transmission or reception objects using DFT-s-OFDM.

14. A transmission or reception method comprising:
determining, by a network-side device, a transmission or reception manner for one or at least two transmission or reception objects, wherein the transmission or reception manner comprises transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners, the transmission or reception object comprises a signal, a channel, a part of a signal, or a part of a channel, and the at least two transmission or reception objects are transmitted or received in an FDM manner or in a discrete frequency domain; and
transmitting or receiving, by the network-side device, the one or at least two transmission or reception objects according to the transmission or reception manner.

15. The method according to claim 14, wherein the transmitting or receiving using different manners satisfies at least one of the following:
the at least two transmission or reception objects are indifferent waveforms;
the at least two transmission or reception objects are generated based on different initialization parameters;
the at least two transmission or reception objects use different scrambling schemes;
the at least two transmission or reception objects use different sequences;
the at least two transmission or reception objects use different phases or phase rotations.

16. The method according to claim 14, wherein the determining, by a network-side device, a transmission or reception manner for at least two transmission or reception objects comprises at least one of the following:
determining the transmission or reception manner according to a band, a subband, a band combination, or a frequency range;
determining the transmission or reception manner according to a purpose of the at least two transmission or reception objects or a scenario;
determining the transmission or reception manner according to type information of the at least two transmission or reception objects or attribute information corresponding to the at least two transmission or reception objects, wherein the type information comprises at least one of a purpose corresponding to the at least two transmission or reception objects, a terminal type, a network type, a synchronization signal type, a broadcast signal type, a BWP, time-frequency resource blocks, a duplex mode, an access scheme or method, a cell, a TRP, a waveform, a RAN service, a network energy-saving feature, an SSB period, a measurement period, a related signal period, or a higher layer protocol feature; and the attribute information comprises at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
determining the transmission or reception manner according to a mobility speed of the terminal;
determining the transmission or reception manner according to time information;
determining the transmission or reception manner according to frequency-domain information;
determining the transmission or reception manner according to an interval between the at least two transmission or reception objects;
determining the transmission or reception manner according to a spectrum deployment mode;
determining the transmission or reception manner according to output power or transmit power;
determining the transmission or reception manner according to configuration of a random access channel, resources of the random access channel, or a preamble format;
determining the transmission or reception manner according to a time-domain configuration or a frequency-domain configuration;
determining the transmission or reception manner according to whether transmission or reception on one or more channels, carriers, band width parts, or cells is repeated;
determining the transmission or reception manner according to a number of repetitions of transmission or reception on one or more channels, carriers, band width parts, or cells;
determining the transmission or reception manner according to a number of transmission or reception objects;
determining the transmission or reception manner according to a multiple access scheme.

17. The method according to claim 14, wherein the method further comprises:
sending, by the network-side device, first information, wherein the first information indicates the transmission or reception manner; wherein
the first information comprises at least one of the following:
a downlink synchronization related signal, wherein the downlink synchronization related signal comprises a PSS, an SSS, or a PBCH DMRS;
a MIB;
a SIB;
a common message or channel;
DCI or a PDCCH;
a signal or channel scrambled by a specific RNTI;
a specific RNTI;
a MAC-CE;
RRC.

18. The method according to claim 14, wherein the method further comprises:
receiving, by the network-side device, capability information; wherein
the capability information comprises at least one of the following:
supporting or using a same manner to transmit or receive the at least two transmission or reception objects;
supporting or using different manners to transmit or receive the at least two transmission or reception objects;
supporting at least one of a waveform, an initialization parameter, a scrambling scheme, a sequence, a phase, or a rotation phase used in transmission or reception.

19. The method according to any one of claims 14 to 17, wherein, before the network-side device enters an RRC connected state, the determining, by a network-side device, a transmission or reception manner for at least two transmission or reception objects comprises at least one of the following:
determining the transmission or reception manner according to second information, wherein the second information comprises at least one of a band, a subband, a band combination, a frequency range, a scenario, a purpose of the at least two transmission or reception objects, a type of the at least two transmission or reception objects, attribute information corresponding to the at least two transmission or reception objects, a mobility speed of the terminal, time information, frequency-domain information, an interval between the at least two transmission or reception objects, a spectrum deployment mode, output power or transmit power, a configuration of a random access channel, resources of the random access channel, a preamble format, a time-domain configuration, a frequency-domain configuration, whether transmission or reception on one or more channels, carriers, band width parts, or cells is repeated or a number of repetitions, a number of transmission or reception objects, or a multiple access scheme, and the second information has a correspondence with the transmission or reception manner;
using different transmission or reception manners at different frequency-domain positions;
using different transmission or reception manners at different time-domain positions;
determining transmission or reception in a specified mode as the transmission or reception manner;
determining transmission or reception at a specific position or time as the transmission or reception manner.

20. The method according to any one of claims 14 to 17, wherein the determining, by a network-side device, a transmission or reception manner for at least two transmission or reception objects further comprises:
determining, by the network-side device, the transmission or reception manner according to a transmission or reception capability supported by the network-side device or a related capability of the transmission or reception capability, wherein the transmission or reception capability or the related capability has a correspondence with the transmission or reception manner.

21. The method according to claim 14, wherein, in a case that the network-side device transmits or receives at least one transmission or reception object, the method further comprises:
in a case that at least one transmission or reception object in the at least one transmission or reception object comprises at least a first part and a second part, transmitting or receiving the first part using DFT-s-OFDM, and transmitting or receiving the second part using CP-OFDM.

22. The method according to claim 14, wherein the method further comprises:
in a case that the at least two transmission or reception objects are contiguous in frequency domain, or a frequency-domain interval between the at least two transmission or reception objects is less than a preset value, transmitting or receiving, by the network-side device, the at least two transmission or reception objects using DFT-s-OFDM.

23. A transmission or reception apparatus comprising:
a determining module, configured to determine a transmission or reception manner for one or at least two transmission or reception objects, wherein the transmission or reception manner comprises transmitting or receiving using a same manner or different manners, or the transmission or reception manner is associated with at least one of a waveform, an initialization parameter, a scrambling scheme, a sequence, a phase, or a rotation phase used in transmission or reception using a same manner or different manners; each transmission or reception object comprises a signal, a channel, a part of a signal, or a part of a channel, and the at least two transmission or reception objects are transmitted or received in a frequency division multiplexing FDM manner or in a discrete frequency domain; and
a transmission or reception module, configured to transmit or receive the one or at least two transmission or reception objects according to the transmission or reception manner.

24. The apparatus according to claim 23, wherein the determining module is configured to perform at least one of the following:
determining the transmission or reception manner according to a band, a subband, a band combination, or a frequency range;
determining the transmission or reception manner according to a purpose of the at least two transmission or reception objects or a scenario;
determining the transmission or reception manner according to type information of the at least two transmission or reception objects or attribute information corresponding to the at least two transmission or reception objects, wherein the type information comprises at least one of a purpose corresponding to the at least two transmission or reception objects, a terminal type, a network type, a synchronization signal type, a broadcast signal type, a band width part BWP, time-frequency resource blocks, a duplex mode, an access scheme or method, a cell, a transmission reception point TRP, a waveform, a radio access network RAN service, a network energy-saving feature, a synchronization signal block SSB period, a measurement period, a related signal period, or a higher layer protocol feature; and the attribute information comprises at least one of BWP information, time-domain resource information, frequency-domain resource information, duplex mode information, access scheme or method, cell type information, TRP type information, waveform information, RAN service information, energy-saving feature information, period information, higher layer feature information, transmission or reception information, purpose information, terminal information, or network information;
determining the transmission or reception manner according to a mobility speed of the terminal;
determining the transmission or reception manner according to time information;
determining the transmission or reception manner according to frequency-domain information;
determining the transmission or reception manner according to an interval between the at least two transmission or reception objects;
determining the transmission or reception manner according to a spectrum deployment mode;
determining the transmission or reception manner according to output power or transmit power;
determining the transmission or reception manner according to configuration of a random access channel, resources of the random access channel, or a preamble format;
determining the transmission or reception manner according to a time-domain configuration or a frequency-domain configuration;
determining the transmission or reception manner according to whether transmission or reception on one or more channels, carriers, band width parts, or cells is repeated;
determining the transmission or reception manner according to a number of repetitions of transmission or reception on one or more channels, carriers, band width parts, or cells;
determining the transmission or reception manner according to a number of transmission or reception objects;
determining the transmission or reception manner according to a multiple access scheme.

25. The apparatus according to claim 23, wherein
the transmission or reception module is configured to receive first information; and the determining module is configured to determine the transmission or reception manner according to the first information; or
the transmission or reception module is configured to send the first information, wherein the first information is configured to indicate the transmission or reception manner; wherein
the first information comprises at least one of the following:
a downlink synchronization related signal, wherein the downlink synchronization related signal comprises a primary synchronization signal PSS, a secondary synchronization signal SSS, or a physical broadcast channel demodulation reference signal PBCH DMRS;
a MIB;
a system information block SIB;
a common message or channel;
downlink control information DCI or a physical downlink control channel PDCCH;
a signal or channel scrambled by a specific radio network temporary identifier RNTI;
a specific RNTI;
a medium access control-control element MAC-CE;
radio resource control RRC.

26. The apparatus according to claim 23, wherein, in a case of transmitting or receiving at least one transmission or reception object, the transmission or reception module is further configured to:
in a case that at least one transmission or reception object in the at least one transmission or reception object comprises at least a first part and a second part, transmit or receive the first part using discrete Fourier transform spread orthogonal frequency division multiplexing DFT-s-OFDM, and transmit or receive the second part using cyclic prefix orthogonal frequency division multiplexing CP-OFDM.

27. The apparatus according to claim 23, wherein the transmission or reception module is further configured to:
in a case that the at least two transmission or reception objects are contiguous in frequency domain, or a frequency-domain interval between the at least two transmission or reception objects is less than a preset value, transmit or receive the at least two transmission or reception objects using DFT-s-OFDM.

28. A terminal, comprising a processor and a memory, wherein the memory stores a program or an instruction executable on the processor, and when the program or instruction is executed by the processor, the steps of the transmission or reception method according to any one of claims 1 to 13 are implemented.

29. A network-side device, comprising a processor and a memory, wherein the memory stores a program or an instruction executable on the processor, and when the program or instruction is executed by the processor, the steps of the transmission or reception method according to any one of claims 14 to 22 are implemented.

30. A readable storage medium, wherein a program or an instruction is stored on the readable storage medium, and when the program or instruction is executed by a processor, the steps of the transmission or reception method according to any one of claims 1 to 13 are implemented, or the steps of the transmission or reception method according to any one of claims 14 to 22 are implemented.
